# EUROPEAN PATENT SPECIFICATION

(11) **EP 4 418 372 B1**
(45) Date of publication and mention of the grant of the patent: **25.06.2025**
(21) Application number: 24157677.6
(22) Date of filing: 14.02.2024
(51) Int. Cl.: H01M 6/04

(54) **AQUEOUS BATTERY**
WÄSSRIGE BATTERIE
BATTERIE AQUEUSE

(30) Priority: 14.02.2023 JP 2023020813; 02.02.2024 JP 2024014987
(43) Date of publication of application: 21.08.2024
(73) Proprietor: TOYOTA JIDOSHA KABUSHIKI KAISHA, Toyota-shi, Aichi-ken, 471-8571 (JP)
(72) Inventor: SUYAMA, Hiroshi, Toyota-shi, 471-8571 (JP); KATAYAMA, Yukihisa, Toyota-shi, 471-8571 (JP)
(74) Representative: D Young & Co LLP

(56) References cited:
- US-A1- 2007 099 050
- US-A1- 2019 386 346
- US-A1- 2021 305 618
- US-B2- 11 699 807

## Description

### Technical Field

The present application discloses an aqueous battery including an aqueous electrolyte solution.

### Background Art

PTL 1 discloses an aqueous electrolyte solution for aqueous batteries, which includes water and potassium pyrophosphate dissolved at a concentration of 2 mol or more per 1 kg of the water.
Ptl 2 discloses aqueous battery comprising an aqueous electrolyte solution comprising K4P2O7 and a separator selected from e.g. cellophane, polyvinylchloride, acrylonitrile, and microporous polypropylene.

### Citation List

### Patent Literature

Ptl 1 Japanese Unexamined Patent Publication (Kokai) No. 2019-220294 Ptl 2 US2007/099050 A1

### Summary

### Technical Problem

If an aqueous electrolyte solution contains a potassium salt at a high concentration, various advantageous effects such as an expansion of a potential window can be exerted. Meanwhile, according to the inventors' new knowledge, an aqueous electrolyte solution, if contains a potassium salt at a high concentration, is deteriorated in wettability of the aqueous electrolyte solution to a separator and thus is difficult to penetrate into the separator.

### Solution To Problem

The present application discloses, as the aforementioned solution to problem, a plurality of aspects below.

### <Aspect 1>

An aqueous battery including a positive electrode, an aqueous electrolyte solution, a separator, and a negative electrode, wherein
the aqueous electrolyte solution contains water and a potassium salt dissolved in the water,
the aqueous electrolyte solution has no freezing point at -60°C or higher, and
at least one element constituting the separator is the same in type as at least one element constituting an anion of the potassium salt.

### <Aspect 2>

The aqueous battery according to aspect 1, wherein
the potassium salt includes a phosphoric acid salt (phosphate), and
the separator has a phosphoric acid group or a hydroxyl group.

### <Aspect 3>

The aqueous battery according to aspect 2, wherein
the potassium salt includes a pyrophosphoric acid salt.

### <Aspect 4>

The aqueous battery according to any one of aspects 1 to 3, wherein
the separator includes a base material and an affinity substance attached to the base material, the base material is a nonwoven fabric or a porous film, and
at least one element constituting the affinity substance is the same in type as at least one element constituting an anion of the potassium salt.

### <Aspect 5>

The aqueous battery according to aspect 4, wherein
the potassium salt includes a phosphoric acid salt, and
the affinity substance has a phosphoric acid group or a hydroxyl group.

### <Aspect 6>

The aqueous battery according to aspect 5, wherein
the affinity substance includes magnesium phosphate.

### <Aspect 7>

The aqueous battery according to aspect 5 or 6, wherein
the affinity substance includes a phosphoric acid ester.

### <Aspect 8>

The aqueous battery according to any one of aspects 1 to 7, wherein
the aqueous electrolyte solution includes the potassium salt dissolved at a concentration of 4.0 mol or more and 7.0 mol or less per 1 kg of the water.

### <Aspect 9>

The aqueous battery according to any one of aspects 1 to 8, wherein
the aqueous electrolyte solution contains the water and potassium ions,
a molar ratio (H₂O/K) of the water to the potassium ions is 3.5 or less, and
the aqueous electrolyte solution contains the water and potassium pyrophosphate dissolved in the water.

### <Aspect 10>

The aqueous battery according to any one of aspects 1 to 9, wherein
a pH of the aqueous electrolyte solution is 3 or more and 13 or less.

### <Aspect 11>

The aqueous battery according to any one of aspects 1 to 10, wherein
the aqueous electrolyte solution does not involve salt precipitation when cooled from 0°C to - 60°C.

### <Aspect 12>

The aqueous battery according to any one of aspects 1 to 11, wherein
a viscosity at 20°C of the aqueous electrolyte solution is 10 mPa·s or more and 600 mPa·s or less.

### Advantageous Effects Of Invention

In the aqueous battery of the present disclosure, wettability of the aqueous electrolyte solution to the separator is improved, and the aqueous electrolyte solution appropriately penetrates into the separator. As a result, an ionic conduction path between the positive electrode and the negative electrode is appropriately kept, and battery performance is enhanced.

### Brief Description Of Drawings

FIG. 1 schematically shows an example of a structure of an aqueous battery.
FIG. 2 schematically shows an example of a structure of an aqueous battery.
FIG. 3 shows a time-potential curve when a 0.5 m aqueous electrolyte solution is used in an electrochemical cell and a constant current on the oxidation side is applied.
FIG. 4 shows a time-potential curve when a 5.0 m aqueous electrolyte solution is used in an electrochemical cell and a constant current on the oxidation side is applied.
FIG. 5 shows a time-potential curve when a 1.0 m aqueous electrolyte solution is used in an electrochemical cell and a constant current on the reduction side is applied.
FIG. 6 shows a time-potential curve when a 5.0 m aqueous electrolyte solution is used in an electrochemical cell and a constant current on the reduction side is applied.
FIG. 7 shows a charge-discharge curve of a cell for evaluation.
FIG. 8A is a graph showing the relationship between the concentration and the crystallization peak temperature (freezing point) of an aqueous electrolyte solution.
FIG. 8B is a graph showing the relationship between the concentration and the crystallization peak intensity of an aqueous electrolyte solution.
FIG. 9 is a graph showing the relationship between the concentration and the glass transition temperature of an aqueous electrolyte solution.
FIG. 10 is a graph showing the relationship between the concentration and the viscosity of an aqueous electrolyte solution.
FIG. 11 shows the relationship between the concentration of K₄P₂O₇ in an aqueous electrolyte solution and the contact angle of the aqueous electrolyte solution on the surface of a cellulose-based nonwoven fabric.
FIG. 12A shows the state of a droplet after a lapse of 10 minutes from dropping of an aqueous electrolyte solution on the surface of a separator in Comparative Example 1.
FIG. 12B shows the state of a droplet after a lapse of 10 minutes from dropping of an aqueous electrolyte solution on the surface of a separator in Comparative Example 2.
FIG. 12C shows the state of a droplet after a lapse of 10 minutes from dropping of an aqueous electrolyte solution on the surface of a separator in Example 1.
FIG. 13A shows the state of a droplet after a lapse of 10 minutes from dropping of an aqueous electrolyte solution on the surface of a separator in Comparative Example 3.
FIG. 13B shows the state of a droplet after a lapse of 10 minutes from dropping of an aqueous electrolyte solution on the surface of a separator in Comparative Example 4.
FIG. 13C shows the state of a droplet after a lapse of 10 minutes from dropping of an aqueous electrolyte solution on the surface of a separator in Example 6.
FIG. 14 shows SEM images of respective separators according to Comparative Example 1 and Example 1.

### Description Of Embodiments

### 1. Aqueous Battery

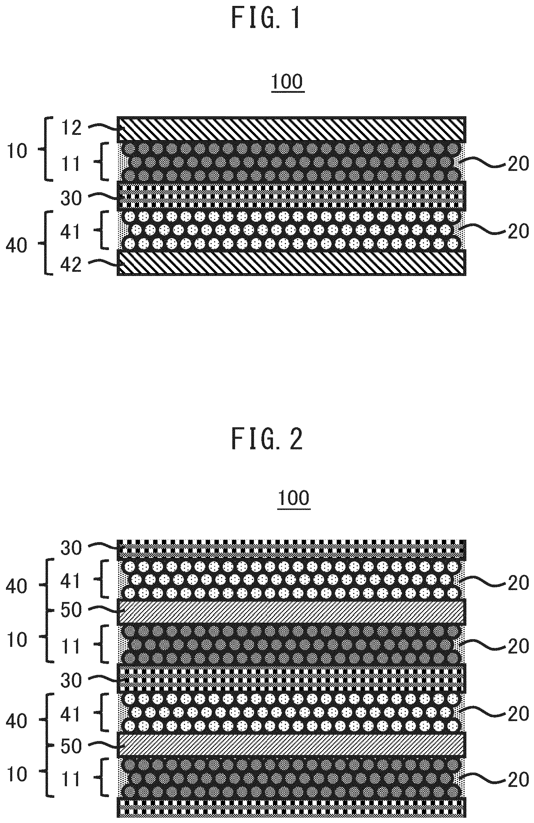

The aqueous battery according to the embodiment will be described below with reference to the drawings, but the technology of the present disclosure is not limited to the following embodiments. FIG. 1 schematically shows a structure of an aqueous battery 100 according to one embodiment. As shown in FIG. 1, the aqueous battery 100 includes a positive electrode 10, an aqueous electrolyte solution 20, a separator 30, and a negative electrode 40. The aqueous electrolyte solution 20 contains water and a potassium salt dissolved in the water. The aqueous electrolyte solution 20 has no freezing point at -60°C or higher. At least one element constituting the separator 30 is the same in type as at least one element constituting the anion of the potassium salt.

### 1.1 Positive Electrode

It is possible to use, as the positive electrode 10, any known positive electrode for an aqueous battery. As shown in FIG. 1, the positive electrode 10 may include a positive electrode active material layer 11 and a positive electrode current collector 12.

### 1.1.1 Positive Electrode Active Material Layer

The positive electrode active material layer 11 contains a positive electrode active material. The positive electrode active material layer 11 can be impregnated with the aqueous electrolyte solution 20. The positive electrode active material layer 11 may contain, in addition to the positive electrode active material, various additives and/or the like such as a conductive aid and/or a binder. The content of each component in the positive electrode active material layer 11 may be appropriately determined according to the objective battery performance. For example, the content of the positive electrode active material may be 40% by mass or more, 50% by mass or more, 60% by mass or more, or 70% by mass or more, and may be 100% by mass or less or 90% by mass or less, based on 100% by mass of the entire positive electrode active material layer 11 (total solid content). The shape of the positive electrode active material layer 11 is not particularly limited, and the positive electrode active material layer may be, for example, a sheet-shaped positive electrode active material layer having an approximately flat surface. The thickness of the positive electrode active material layer 11 is not particularly limited, and may be, for example, 0.1 µm or more, 1 µm or more, or 10 µm or more, and may be 2 mm or less, 1 mm or less, or 500 µm or less.

Any substance capable of functioning as the positive electrode active material of the aqueous battery can be used as the positive electrode active material. The charge-discharge potential of the positive electrode active material is higher than that of the below-mentioned negative electrode active material. The type of the positive electrode active material can be appropriately selected in consideration of the type of carrier ions and the potential window and the like of the aqueous electrolyte solution 20. The positive electrode active material may be one which inserts and deinserts carrier ions by intercalation, or which inserts and deinserts carrier ions by a conversion reaction or an alloying reaction. The "carrier ion" may be, for example, a proton (H⁺), a hydroxide ion (OH⁻), a potassium ion (K⁺), or another cation or anion. Only one positive electrode active material may be used alone, or two or more thereof may be used in combination.

The positive electrode active material may be hydroxides or oxides such as Ni(OH)₂ being a layered nickel hydroxide compound (e.g., JPA 2023-154313), AₓK_{y}Ni_{1-z}M_{z}O_{2±δ}-nH₂O (wherein A is at least one of Li, Na, Rb, Cs, Mg, Ca, Sr, Ba and Sc, M is at least one of transition metal group elements, 2A group elements, 3A group elements, 2B group elements and 3B group elements, 0≤x<0.5, 0<y≤0.5, 0≤z≤0.5, 0<n≤2 and (α×x)+y≤0.5 are satisfied, α is a valence of the cation of element A, e.g., JPA 2023-132287), a manganese spinel (for example, LiMn₂O₄), or a nickel-manganese-cobalt-containing composite oxide (NMC). The positive electrode active material may contain a K element. Specific examples thereof include oxides and polyanions containing the K element. More specifically, the positive electrode active material may be a composite oxide of potassium and transition metal. Such composite oxide may be at least one selected from potassium cobalt composite oxide (KCoO₂, etc.), potassium nickel composite oxide (KNiO₂, etc.), potassium nickel titanium composite oxide (KNi_{1/2}Ti_{1/2}O₂, etc.), potassium nickel manganese composite oxide (KNi_{1/2}Mn_{1/2}O₂, KNi_{1/3}Mn_{2/3}O₂, etc.), potassium manganese composite oxide (KMnO₂, KMn₂O₄, etc.), potassium iron manganese composite oxide (K_{2/3}Fe_{1/3}Mn_{2/3}O₂, etc.), potassium nickel cobalt manganese composite oxide (KNi_{1/3}Co_{1/3}Mn_{1/3}O₂, etc.), potassium iron composite oxide (KFeO₂, etc.), potassium chromium composite oxide (KCrO₂, etc.), potassium iron phosphate compound (KFePO₄, etc.), potassium manganese phosphate compound (KMnPO₄, etc.), and potassium cobalt phosphate compound (KCoPO₄). Even if the K site in the composite oxide is composed of other alkali metal elements, there is a possibility that carrier ions can be inserted and deinserted by ion exchange or the like. Alternatively, the positive electrode active material may be an organic active material such as Prussian blue. Alternatively, the positive electrode active material may be at least one selected from potassium titanate, TiO₂ and sulfur (S) which show a noble charge-discharge potential compared to the below-mentioned negative electrode active material.

The shape of the positive electrode active material may be any shape capable of functioning as the positive electrode active material of the battery. For example, the positive electrode active material may be in the form of particles. The positive electrode active material may be a solid material, a hollow material, a material with voids, or a porous material. The positive electrode active material may be a primary particle, or a secondary particle obtained by agglomeration of a plurality of primary particles. The mean particle diameter D50 of the positive electrode active material may be, for example, 1 nm or more, 5 nm or more, or 10 nm or more, and may be 500 µm or less, 100 µm or less, 50 µm or less, or 30 µm or less. The mean particle diameter D50 in the present application is the particle diameter (median diameter) at 50% of the integrated value in the volume-based particle diameter distribution determined by the laser diffraction and scattering method.

Examples of the conductive aid which can be included in the positive electrode active material layer 11 include carbon materials such as vapor-phase-grown carbon fiber (VGCF), acetylene black (AB), Ketjen black (KB), carbon nanotube (CNT) and carbon nanofiber (CNF); and metal materials such as nickel, titanium, aluminum, stainless steel and the like which are slightly insoluble (poorly soluble) in an aqueous electrolyte solution. The conductive aid may be, for example, in the form of particles or fibers, and the size thereof is not particularly limited. Only one conductive aid may be used alone, or two or more thereof may be used in combination.

Examples of the binder which can be included in the positive electrode active material layer 11 include butadiene rubber (BR)-based binders, butylene rubber (IIR)-based binders, acrylate-butadiene rubber (ABR)-based binders, styrene-butadiene rubber (SBR)-based binders, polyvinylidene fluoride (PVdF)-based binders, polytetrafluoroethylene (PTFE)-based binders, polyimide (PI)-based binders and the like. Only one binder may be used alone, or two or more thereof may be used in combination.

### 1.1.2 Positive Electrode Current Collector

As shown in FIG. 1, the positive electrode 10 may include a positive electrode current collector 12 in contact with the positive electrode active material layer 11. The positive electrode current collector 12 may be in contact with the aqueous electrolyte solution 20. It is possible to use, as the positive electrode current collector 12, any material capable of functioning as the positive electrode current collector of the aqueous battery. The positive electrode current collector 12 may be in the form of foil, plate, mesh, perforated metal and foam. The positive electrode current collector 12 may be formed of a metal foil or a metal mesh. In particular, the metal foil is excellent in ease of handling or the like. The positive electrode current collector 12 may be composed of a plurality of foils. Examples of the metal material constituting the positive electrode current collector 12 include those containing at least one element selected from the group consisting of Cu, Ni, Al, V, Au, Pt, Mg, Fe, Ti, Pb, Co, Cr, Zn, Ge, In, Sn, and Zr. In particular, the positive electrode current collector 12 preferably contains Al. In the aqueous battery 100, even when the positive electrode current collector 12 contains Al, the Al hardly elutes into the aqueous electrolyte solution 20. The positive electrode current collector 12 may be one in which the above metal is plated or vapor-deposited on a metal foil or a base material. When the positive electrode current collector 12 is composed of a plurality of metal foils, the positive electrode current collector may have some layer between the plurality of metal foils. The thickness of the positive electrode current collector 12 is not particularly limited, and may be, for example, 0.1 µm or more or 1 µm or more, and may be 1 mm or less or 100 µm or less.

### 1.2 Aqueous Electrolyte Solution

The aqueous electrolyte solution 20 contains water and a potassium salt dissolved in the water. The aqueous electrolyte solution 20 may be held between the positive electrode 10 and the negative electrode 40 by the separator 30. The aqueous electrolyte solution 20 may be in contact with the above-mentioned positive electrode current collector 12, may be included in the above-mentioned positive electrode active material layer 11, may be in contact with the below-mentioned negative electrode current collector 42, or may be included in the below-mentioned negative electrode active material layer 41.

### 1.2.1 Solvent

The aqueous electrolyte solution 20 contains water as a solvent. The solvent contains water as a main component. Namely, water accounts for 50 mol% or more and 100 mol% or less of the total amount of solvent constituting the aqueous electrolyte solution 20 (100 mol%). Water may account for 70 mol% or more, 90 mol% or more, or 95 mol% or more of the total amount of the solvent. Meanwhile, the upper limit of the proportion of water in the solvent is not particularly limited. The solvent may be composed only of water (100 mol% water).

The aqueous electrolyte solution 20 may contain, in addition to water, solvents other than water, for example, from the viewpoint of forming solid electrolyte interphase (SEI) on the surface of the active material. Examples of solvents other than water include one or more organic solvents selected from ethers, carbonates, nitriles, alcohols, ketones, amines, amides, sulfur compounds and hydrocarbons. The solvents other than water may account for 50 mol% or less, 30 mol% or less, 10 mol% or less, or 5 mol% or less of the total amount of solvents constituting the aqueous electrolyte solution 20 (100 mol%).

### 1.2.2 Potassium Salt

The aqueous electrolyte solution 20 contains a potassium salt dissolved in water. The potassium salt may be any salt capable of being dissolved in water. For example, the potassium salt may be at least one selected from KPF₆, KBF₄, K₂SO₄, KNO₃, CH₃COOK, (CF₃SO₂)₂NK, KCF₃SO₃, (FSO₂)₂NK, K₂HPO₄, KH₂PO₄, KPO₃, K₄P₂O₇, K₅P₃O₁₀, K₆P₄O₁₃, K₇P₅O₁₆, (KPO₃)n, and the like. According to the inventors' new findings, the performance of the aqueous battery 100 is further easily enhanced when the potassium salt includes a phosphoric acid salt or an acetic acid salt, particularly, a phosphoric acid salt, further particularly a polyphosphoric acid salt, in particular, a pyrophosphoric acid salt (potassium pyrophosphate, K₄P₂O₇).

The potassium salt in the aqueous electrolyte solution 20 may dissociate into potassium ions and anions. In the aqueous electrolyte solution 20, potassium ions may completely dissociate from anions, or may form aggregates (associations), for example, in close proximity to anions. For example, when the aqueous electrolyte solution 20 contains potassium pyrophosphate dissolved in water, "potassium pyrophosphate dissolved in water" in the aqueous electrolyte solution 20 may be present as ions such as K⁺, P₂O₇⁴⁻, KP₂O₇³⁻, K₂P₂O₇²⁻, and K₃P₂O₇⁻, or aggregates (associations) of these ions.

In the aqueous battery 100, the components and concentration in the aqueous electrolyte solution 20 are determined so that "aqueous electrolyte solution 20 has no freezing point at -60°C or higher". According to the inventors' new findings, in order to achieve the conditions that "aqueous electrolyte solution 20 has no freezing point at -60°C or higher", the concentration of the potassium salt in the aqueous electrolyte solution 20 should be higher than ever before. For example, according to the inventors' new knowledge, when the freezing point is adjusted by dissolving only the potassium salt in water in the aqueous electrolyte solution 20, the freezing point of the aqueous electrolyte solution 20 decreases as the concentration of the potassium salt in water increases, and when the concentration of the potassium salt in the aqueous electrolyte solution 20 reaches a certain level or more, the freezing point substantially disappears. Namely, when the concentration of the potassium salt in the aqueous electrolyte solution 20 is in a certain level or more, the aqueous electrolyte solution 20 has no freezing point at -60°C or higher. For example, when the aqueous electrolyte solution 20 contains the potassium salt dissolved at a concentration of 4.0 mol or more per 1 kg of water, aqueous electrolyte solution 20 easily has no freezing point at -60°C or higher. However, when a plurality of kinds of the potassium salts is dissolved in the aqueous electrolyte solution 20 or when other components are dissolved together with the potassium salt in water, the minimum concentration of the potassium salt at which the freezing point of the aqueous electrolyte solution disappears may be less than 4.0 mol. In this respect, the concentration of the potassium salt per 1 kg of water in the aqueous electrolyte solution 20 may be, for example, 2.5 mol or more, 3.0 mol or more, 3.5 mol or more, or 4.0 mol or more. The upper limit of the concentration is not particularly limited. For example, the concentration of the potassium salt per 1 kg of water may be 7.0 mol or less or 6.0 mol or less.

As mentioned above, in the aqueous electrolyte solution 20, the freezing point of the aqueous electrolyte solution decreases as the concentration of the potassium salt in water increases, and when the concentration of the potassium salt in the aqueous electrolyte solution reaches a certain level or more, the freezing point substantially disappears. According to the inventors' new findings, as the concentration of the potassium salt in the aqueous electrolyte solution 20 is higher, the potential window of the aqueous electrolyte solution 20 more easily expands. As the concentration is higher, elution of the current collector into the aqueous electrolyte solution 20 is more easily suppressed. Meanwhile, as the concentration is lower, the viscosity of the aqueous electrolyte solution 20 is smaller. In consideration of these, the aqueous electrolyte solution 20 may be, for example, one containing the potassium salt dissolved at a concentration of 2.5 mol or more and 7.0 mol or less, 3.0 mol or more and 7.0 mol or less, 3.5 mol or more and 7.0 mol or less, or 4.0 mol or more and 7.0 mol or less per 1 kg of the water.

In one embodiment, the aqueous electrolyte solution 20 may contain water and potassium pyrophosphate dissolved at a certain concentration or more per 1 kg of the water. The concentration of the potassium pyrophosphate may be, for example, 2.5 mol or more, 3.0 mol or more, 3.5 mol or more, or 4.0 mol or more per 1 kg of the water. The upper limit of the concentration of the potassium pyrophosphate in the aqueous electrolyte solution 20 is not particularly limited, and if the concentration is excessively high, the viscosity of the aqueous electrolyte solution 20 may increase excessively. In this respect, the concentration of the potassium pyrophosphate may be 7.0 mol or less or 6.0 mol or less per 1 kg of the water. According to the inventors' new knowledge, when the aqueous electrolyte solution 20 contains water and the potassium pyrophosphate dissolved at a concentration of 4.0 mol or more per 1 kg of the water, not only the aqueous electrolyte solution 20 has no freezing point at -60°C or higher, but also the performance of the aqueous battery 100 is further enhanced. When the aqueous electrolyte solution 20 contains the potassium pyrophosphate dissolved in the water, not only the potassium pyrophosphate, but also other electrolytes may be contained. In this case, the potassium pyrophosphate may account for 50 mol% or more and 100 mol% or less, 70 mol% or more and 100 mol% or less, or 90 mol% or more and 100 mol% or less, and other electrolytes may account for 0 mol% or more and 50 mol% or less, 0 mol% or more and 30 mol% or less, or 0 mol% or more and 10 mol% or less, of the total amount of electrolytes (100 mol%) dissolved in the aqueous electrolyte solution 20.

According to the inventors' new findings, also when the aqueous electrolyte solution 20 contains water and potassium ions, and the molar ratio (H₂O/K) of the water to the potassium ions is 3.5 or less and the aqueous electrolyte solution 20 contains the water and potassium pyrophosphate dissolved in the water, the aqueous electrolyte solution 20 easily has no freezing point at -60°C or higher. Here, "potassium ions" are those at least partially derived from the potassium pyrophosphate. As mentioned above, "potassium ions" may form aggregates (associations), for example, in close proximity to anions. The molar ratio of the water to the potassium ions in the aqueous electrolyte solution 20 may be easily specified by measuring the amount of the water and the amount of K dissolved and present in the water.

Ions, aggregates (associations), and the like contained in the aqueous electrolyte solution 20 can be converted into the potassium salt, thereby specifying "concentration of potassium salt dissolved in water". Here, the aqueous electrolyte solution 20 may contain more potassium ions than the concentration which can be converted as the potassium salt. In other words, it is not necessary for the entire potassium ions contained in the aqueous electrolyte solution 20 to be converted as "dissolved potassium salt". For example, when a potassium compound (for example, KOH) other than the potassium salt is dissolved together with the potassium salt in the aqueous electrolyte solution 20, the aqueous electrolyte solution 20 may contain more potassium ions than the concentration which can be converted as the potassium salt. The aqueous electrolyte solution 20 may contain more anions than the concentration which can be converted as the potassium salt. In other words, it is not necessary for the entire anions contained in the aqueous electrolyte solution 20 to be converted as "dissolved potassium salt". For example, when the aqueous electrolyte solution 20 contains pyrophosphate ions (it may be P₂O₇⁴⁻ and it may be present in a state of being linked to cations as mentioned above, such as KP₂O₇³⁻, K₂P₂O₇²⁻, K₃P₂O₇⁻, etc.) as anions and also pyrophosphate ion sources (for example, H₄P₂O₇, etc.) other than K₄P₂O₇ are dissolved together with K₄P₂O₇ in the aqueous electrolyte solution 20, the aqueous electrolyte solution 20 may contain more pyrophosphate ions than the concentration which can be converted as potassium pyrophosphate. Meanwhile, also when potassium ion sources (for example, KOH) other than the potassium salt and anion sources (for example, H₄P₂O₇) other than the potassium salt are dissolved in water and dissociate into potassium ions and anions in the aqueous electrolyte solution 20, the potassium ions and anions are converted as "potassium salt dissolved in water".

### 1.2.3 Other Components

The aqueous electrolyte solution 20 may contain a plurality of kinds of cations and a plurality of kinds of anions. For example, the aqueous electrolyte solution 20 may include not only potassium ions protons and/or hydroxide ions as carrier ions and phosphate ions as anions, but also other cations and anions. For example, alkali metal ions other than potassium ions, and alkaline earth metal ions, transition metal ions, and the like may be contained. The aqueous electrolyte solution 20 may contain an acid, a hydroxide and the like for pH adjustment. The aqueous electrolyte solution 20 may contain various additives.

### 1.2.4 pH

The pH of the aqueous electrolyte solution 20 is not particularly limited. However, if the pH is too high, the potential window on the oxidation side of the aqueous electrolyte solution 20 may be narrow. In this respect, the pH of the aqueous electrolyte solution 20 may be 3 or more and 14 or less. The pH may be 4 or more, 5 or more, 6 or more, or 7 or more, and may be 13 or less, or 12 or less.

### 1.2.5 Freezing Point

As mentioned above, the aqueous electrolyte solution 20 has no freezing point at -60°C or higher. This means that H₂O molecules cannot form a network of crystallization with each other in the aqueous electrolyte solution 20, namely, few freezable free H₂O molecules are present in the aqueous electrolyte solution 20. When the aqueous electrolyte solution 20, which contains few freezable free H₂O molecules, is used in the aqueous battery 100, elution of the current collector into the aqueous electrolyte solution 20 can be suppressed. When the aqueous electrolyte solution 20 has no freezing point at -60°C, it is also possible to use the aqueous battery 100 even at extremely low temperature. Namely, the aqueous battery 100 appropriately operates even in cold district. The aqueous electrolyte solution 20 may have no freezing point at -80°C or higher, no freezing point at -100°C or higher, or no freezing point at -120°C or higher. In order to achieve the conditions that "aqueous electrolyte solution 20 has no freezing point - 60°C or higher", it is effective to, as mentioned above, allow the concentration of the potassium salt in the aqueous electrolyte solution 20 to be a high concentration (for example, dissolve the potassium salt (in particular, potassium pyrophosphate) at a high concentration of 4.0 mol or more per 1 kg of water, etc.). As far as the present inventor has confirmed, the same effect can be ensured even when the aqueous electrolyte solution 20 has no freezing point at - 40°C or higher.

The presence or absence of "freezing point" of the aqueous electrolyte solution 20 is confirmed by differential scanning calorimetry (DSC). Note that the DSC sweep rate is set at 5°C/min for both descending temperature and ascending temperature, and the sweep range is set as follows: temperature descending to -120°C from room temperature, followed by temperature ascending to 40°C. The atmosphere in DSC is an atmosphere of inert gas such as Ar, and the pressure is equal to the atmospheric pressure. However, since a sealed aluminum container is used for the evaluation, the atmosphere inside the container is the sealed atmosphere under atmospheric pressure. If the crystallization peak temperature (freezing point temperature) is not confirmed at - 60°C or higher when the aqueous electrolyte solution is measured under the above conditions, the aqueous electrolyte solution is considered to have "no freezing point at -60°C or higher".

### 1.2.6 Presence or Absence of Precipitation of Salt

It is preferable that the aqueous electrolyte solution 20 does not involve salt precipitation when cooled from 0°C to -60°C. Thus, when the aqueous electrolyte solution 20 does not involve salt precipitation due to temperature change, it becomes possible to perform stable ionic conduction even at low temperature. For example, the aqueous battery 100 can be used even at extremely low temperature in cold district. The aqueous electrolyte solution 20 may include water and potassium pyrophosphate dissolved in the water, as mentioned above. Here, according to the inventors' new findings, the saturation solubility of potassium pyrophosphate in water has low temperature dependence and scarcely changes at low temperature of 0°C or lower. In this respect, even if potassium pyrophosphate is dissolved in the aqueous electrolyte solution 20 at 0°C at high concentration (for example, high concentration of 4.0 mol or more per 1 kg of water) and the aqueous electrolyte solution 20 is cooled from 0°C to -60°C, precipitation of potassium pyrophosphate does not substantially occur in the aqueous electrolyte solution 20. Herein, "presence or absence of precipitation of salt" in the case of cooling from 0°C to -60°C can be determined by, for example, DSC. Namely, when differential heat due to salt precipitation or crystallization is not exhibited in cooling of the aqueous electrolyte solution from 0°C to -60°C, the aqueous electrolyte solution is considered to "not involve salt precipitation when cooled from 0°C to -60°C".

### 1.2.7 Viscosity

If the viscosity of the aqueous electrolyte solution 20 is too high, the ionic conductivity of the aqueous electrolyte solution 20 may deteriorate. Meanwhile, if an electrolyte is dissolved at high concentration in the aqueous electrolyte solution 20, the aqueous electrolyte solution 20 may have a certain level or more of the viscosity. In this respect, the aqueous electrolyte solution 20 may have a viscosity of 10 mPa·s or more and 600 mPa·s or less at 20°C. The viscosity may be 15 mPa·s or more, 20 mPa·s or more, 30 mPa·s or more, or 40 mPa·s or more, and may be 500 mPa·s or less, 400 mPa·s or less, 300 mPa·s or less, 250 mPa·s or less, or 200 mPa·s or less.

### 1.3 Separator

The aqueous battery 100 includes a separator 30. The separator 30 is provided between the positive electrode 10 and the negative electrode 40. The separator 30 retains the above-mentioned aqueous electrolyte solution 20.

As mentioned above, the aqueous electrolyte solution 20 has no freezing point at -60°C or higher. This means that H₂O molecules cannot form a network of crystallization with each other in the aqueous electrolyte solution 20, namely, few freezable free H₂O molecules are present in the aqueous electrolyte solution 20. More specifically, it is considered that an anion network structure called Water-in-salt is formed in the aqueous electrolyte solution 20 and a network of H₂O molecules disappears. According to the inventors' new findings, the affinity with the separator, of the aqueous electrolyte solution 20 having no freezing point at -60°C or higher, is largely different from that of a conventional aqueous electrolyte solution having a freezing point at -60°C or higher. Specifically, the aqueous electrolyte solution 20 is poor in wettability to a conventional separator including a nonwoven fabric or a porous film, and hardly penetrates into such a conventional separator. Namely, when an aqueous battery is formed with such a conventional separator together with the aqueous electrolyte solution 20, no ionic conduction path between a positive electrode and a negative electrode may be appropriately formed.

In order to solve the above problems, the separator 30 used in the aqueous battery 100 of the present disclosure is one high in affinity with the aqueous electrolyte solution 20. As mentioned above, it is considered that an anion network structure called Water-in-salt is formed in the aqueous electrolyte solution 20. Therefore, it is important for increasing the affinity of the separator 30 with the aqueous electrolyte solution 20 that the separator 30 has "anionphilicity". Specifically, it is important for at least one element constituting the separator 30 to be the same in type as at least one element constituting the anion of the potassium salt dissolved in the aqueous electrolyte solution 20. In other words, element(s) constituting the separator 30 include(s) the same type of element as at least one element constituting the anion of the potassium salt dissolved in the aqueous electrolyte solution 20. The separator 30 high in affinity with the anion of the potassium salt dissolved in the aqueous electrolyte solution 20 is thus used in the aqueous battery 100, and therefore the wettability of the aqueous electrolyte solution 20 to the separator 30 is improved, the aqueous electrolyte solution 20 can be allowed to appropriately penetrate into the separator 30, and the ionic conduction path between the positive electrode 10 and the negative electrode 40 is appropriately easily ensured.

"Element which is the same in type as at least one element constituting the anion of the potassium salt" (hereinafter, sometimes referred to as "element X") among the element(s) constituting the separator 30 may be present in the surface (front surface) of the separator 30, may be present in the inside of the separator 30, or may be present in both the surface and the inside. The element X may be present in only one face of the separator 30 (for example, facing the positive electrode 10), may be present in only other face of the separator 30 (for example, facing the negative electrode 40), or may be present in both one face and other face thereof. In particular, when the element X is present in both one face and other face of the separator 30, much higher performance is easily obtained.

The type of the element X depends on the type of the anion of the potassium salt. For example, the element X may be at least one element among P, S, and O. Alternatively, the element X may be at least one element other than H and O. Alternatively, the element X may be at least one element other than H and O, and one of or both H and O, in addition to the element X, may be contained as element(s) constituting the separator.

For example, when the potassium salt dissolved in the aqueous electrolyte solution 20 contains the above-mentioned phosphoric acid salt (preferably pyrophosphoric acid salt), one of or both P and O may be contained as element(s) constituting the separator 30. Specifically, the separator 30 may be one having a phosphorus-containing group or an oxygen-containing group, or may be, for example, one having a phosphoric acid group or a hydroxyl group. In one embodiment, the separator 30 has, for example, a phosphorus-containing group. The phosphoric acid group as the phosphorus-containing group may have, for example, hydrogen substituted by other substituent, as in, for example, an alkylphosphoric acid ester group. The phosphoric acid group may be a polyphosphoric acid group or a pyrophosphoric acid group.

Alternatively, when the potassium salt dissolved in the aqueous electrolyte solution 20 contains a sulfuric acid salt, one of or both S and O may be contained as element(s) constituting the separator 30. Specifically, the separator 30 may be one having a sulfur-containing group or an oxygen-containing group, or may be, for example, one having at least one functional group selected from a sulfo group, a sulfonyl group, a sulfuric acid group and a hydroxyl group. In one embodiment, the separator 30 has, for example, a sulfur-containing group. The sulfur-containing group may have, for example, hydrogen substituted by other substituent, as in, for example, an alkylsulfuric acid ester group. Alternatively, when the potassium salt dissolved in the aqueous electrolyte solution 20 includes a carboxylic acid salt such as an acetic acid salt, the separator 30 may contain C, H and O. Specifically, the separator 30 may contain a carboxyl group.

The element X in the separator 30 may be contained in a substance attached to a base material constituting the separator 30. In other words, the separator 30 may include a base material and an affinity substance attached to the base material, and at least one element constituting the affinity substance may be the same in type as at least one element constituting the anion of the potassium salt. The affinity substance can also be said to be a substance relatively enhancing the wettability of the aqueous electrolyte solution 20 to the separator 30 (relatively decreasing the contact angle of the aqueous electrolyte solution 20 to the separator 30). In other words, the affinity of the affinity substance with the aqueous electrolyte solution 20 is higher than the affinity of the base material with the aqueous electrolyte solution 20.

### 1.3.1 Base Material

When the separator 30 includes a base material and an affinity substance attached to the base material, the base material may be, for example, a nonwoven fabric or a porous film. The nonwoven fabric may include, for example, at least one of cellulose, a resin, and glass. In one embodiment, the nonwoven fabric includes cellulose. The porous film may be one not only containing at least one polymer compound selected from polyethylene (PE), polypropylene (PP), polyester, polyamide, and the like, but also having a plurality of voids. In one embodiment, the porous film includes one of or both polyethylene and polypropylene. The base material may have a monolayer structure or may have a multilayer structure. Examples of the base material of the multilayer structure can include a base material of a two-layer structure of PE/PP, or a base material of a three-layer structure of PP/PE/PP or PE/PP/PE. The base material may be any one as long as it has a shape capable of forming the separator 30, and may be, for example, one having a thickness of 5 µm or more and 1 mm or less. The base material may be one adopted as a separator in a conventional aqueous battery. In other words, the separator 30 may be one in which the affinity substance is attached to a conventional separator.

### 1.3.2 Affinity Substance

The affinity substance is a substance having affinity with the aqueous electrolyte solution 20. Specifically, at least one element constituting the affinity substance is the same in type as at least one element constituting the anion of the potassium salt. The element(s) constituting the affinity substance depend(s) on the type of the anion of the potassium salt.

For example, when the potassium salt dissolved in the aqueous electrolyte solution 20 contains a phosphoric acid salt, the affinity substance may contain one of or both P and O. Specifically, the affinity substance may be one having a phosphorus-containing group or an oxygen-containing group, or may be, for example, one having a phosphoric acid group or a hydroxyl group. In one embodiment, the affinity substance has, for example, a phosphorus-containing group. The phosphoric acid group may have, for example, some hydrogen substituted by other substituent, as in, for example, an alkylphosphoric acid ester group. The phosphoric acid group may be a polyphosphoric acid group (for example, pyrophosphoric acid group).

Alternatively, when the potassium salt dissolved in the aqueous electrolyte solution 20 contains a sulfuric acid salt, the affinity substance may contain S. Specifically, the affinity substance may be one having a sulfur-containing group or an oxygen-containing group, or may be, for example, one having at least one functional group selected from a sulfo group, a sulfonyl group, a sulfuric acid group and a hydroxyl group. In one embodiment, the affinity substance has, for example, a sulfur-containing group. The sulfur-containing group may have, for example, some hydrogen substituted by other substituent, as in, for example, an alkylsulfuric acid ester group. Alternatively, when the potassium salt dissolved in the aqueous electrolyte solution 20 includes a carboxylic acid salt, the affinity substance may contain a carboxyl group.

The affinity substance may be any one as long as it can keep the state of being attached to the base material in the aqueous battery 100, and may be an inorganic substance or may be an organic substance.

For example, when the potassium salt dissolved in the aqueous electrolyte solution 20 contains a phosphoric acid salt, the affinity substance may contain an inorganic compound having P as a constituent element. For example, the affinity substance may contain a salt (phosphoric acid salt of alkaline earth metal) of at least one alkaline earth metal selected from magnesium, calcium, strontium and barium, and phosphoric acid. The phosphoric acid salt of alkaline earth metal may be a polyphosphoric acid salt, or may be a pyrophosphoric acid salt. According to the inventors' new findings, when the potassium salt dissolved in the aqueous electrolyte solution 20 contains a phosphoric acid salt and the affinity substance contains magnesium phosphate, particularly magnesium polyphosphate, further particularly magnesium pyrophosphate, the affinity of the separator 30 with the aqueous electrolyte solution 20 can be further appropriately enhanced.

Alternatively, when the potassium salt dissolved in the aqueous electrolyte solution 20 contains a phosphoric acid salt, the affinity substance may contain an organic compound having P as a constituent element. For example, the affinity substance may be an organic phosphoric acid ester. The organic phosphoric acid ester may be an alkylphosphoric acid ester. The alkylphosphoric acid ester may be a monoalkylphosphoric acid ester, may be a dialkylphosphoric acid ester, or may be a mixture thereof. According to the inventors' new findings, when the potassium salt dissolved in the aqueous electrolyte solution 20 contains a phosphoric acid salt and the affinity substance contains a phosphoric acid ester, particularly an alkylphosphoric acid ester, further particularly an alkylphosphoric acid ester having 1 to 10 carbon atoms, the affinity of the separator 30 with the aqueous electrolyte solution 20 can be further appropriately enhanced. The alkyl group constituting the alkylphosphoric acid ester may be linear or branched. For example, when the affinity substance contains 2-ethylhexyl phosphate, the affinity of the separator 30 with the aqueous electrolyte solution 20 is further easily increased.

The affinity substance, for example, may be dispersed and present in one of or both the front surface and the inside of the base material, or may be present on the front surface of the base material, in a layered manner. In particular, when the affinity substance is present in both the front and rear surfaces of the base material, more excellent performance is easily exhibited. The amount of the affinity substance attached to the base material is not particularly limited, and may be any amount as long as voids are kept at a level allowing for penetration of the aqueous electrolyte solution 20 into the separator 30. The method for attaching the affinity substance to the base material is not particularly limited. For example, the affinity substance may be attached to the base material by bringing the affinity substance into contact with the base material. More specifically, the affinity substance may be attached to the base material by coating the base material with a slurry or solution containing the affinity substance or immersing the base material in a slurry or solution containing the affinity substance, to bring the affinity substance into contact with the base material, and then drying them.

### 1.3.3 Other modes

The separator 30 is not limited to one including the base material and the affinity substance. The entire separator 30 may be constituted from the affinity substance. It is, however, noted that when the separator 30 includes the base material and the affinity substance, not only the backbone of the separator 30 as a whole is easily kept by the base material and the separator 30 is excellent in ease of handling, but also a conventionally known separator may be used as the base material and thus the cost is low.

### 1.4 Negative Electrode

It is possible to use, as the negative electrode 40, any known negative electrode for an aqueous battery. As shown in FIG. 1, the negative electrode 40 may include a negative electrode active material layer 41 and a negative electrode current collector 42.

### 1.4.1 Negative Electrode Active Material Layer

The negative electrode active material layer 41 contains a negative electrode active material. The negative electrode active material layer 41 can be impregnated with the aqueous electrolyte solution 20. The negative electrode active material layer 41 may contain, in addition to the negative electrode active material, various additives such as a conductive aid and/or a binder. The content of each component in the negative electrode active material layer 41 may be appropriately determined according to the objective battery performance. For example, the content of the negative electrode active material may be 40% by mass or more, 50% by mass or more, 60% by mass or more, or 70% by mass or more, and may be 100% by mass or less or 90% by mass or less, based on 100% by mass of the entire negative electrode active material layer 41 (entire solid content). The shape of the negative electrode active material layer 41 is not particularly limited, and may be, for example, a sheet-shaped negative electrode active material layer having an approximately flat surface. The thickness of the negative electrode active material layer 41 is not particularly limited, and may be, for example, 0.1 µm or more, 1 µm or more, or 10 µm or more, and may be 2 mm or less, 1 mm or less, or 500 µm or less.

It is possible to use, as the negative electrode active material, any substance capable of functioning as the negative electrode active material of the aqueous battery. The negative electrode active material has a lower charge-discharge potential than that of the above-mentioned positive electrode active material, and can be appropriately selected in consideration of the carrier ions and the potential window of the above-mentioned aqueous electrolyte solution 20. For example, the negative electrode active material may be potassium-transition metal composite oxide; titanium oxide; metal sulfides such as Mo₆S₈; elemental sulfur; KTi₂(PO₄)₃; NASICON-type compounds; WO₃, and the like. The negative electrode active material may be a hydrogen storage alloy. The negative electrode active material may be an inorganic compound having a crystalline structure belonging to space group I23. The inorganic compound having a crystalline structure belonging to space group I23 may contain, for example, an element A and an element M and O. Here, the element A is at least one of Bi and La, the element M is at least one of Bi, Mn, Fe, Co and Ni, both the element A and the element M may be Bi. The negative electrode active material may be one which inserts and deinserts carrier ions by intercalation, or which inserts and deinserts carrier ions by a conversion reaction or an alloying reaction. Only one negative electrode active material may be used alone, or two or more thereof may be used in combination.

The shape of the negative electrode active material may be any shape capable of functioning as the negative electrode active material of the battery. For example, the negative electrode active material may be in the form of particles. The negative electrode active material may be a solid material, a hollow material, a material with voids, or a porous material. The negative electrode active material may be a primary particle, or a secondary particle obtained by agglomeration of a plurality of primary particles. The mean particle diameter D50 of the negative electrode active material may be, for example, 1 nm or more, 5 nm or more, or 10 nm or more, and may be 500 µm or less, 100 µm or less, 50 µm or less, or 30 µm or less.

Examples of the conductive aid which can be contained in the negative electrode active material layer 41 include carbon materials such as vapor-phase-grown carbon fiber (VGCF), acetylene black (AB), Ketjen black (KB), carbon nanotube (CNT) and carbon nanofiber (CNF); and metal materials such as nickel, titanium, aluminum, stainless steel and the like which are slightly insoluble (poorly soluble) in an electrolyte solution. The conductive aid may be, for example, in the form of particles or fibers, and the size thereof is not particularly limited. Only one conductive aid may be used alone, or two or more thereof may be used in combination.

Examples of the binder which can be contained in the negative electrode active material layer 41 butadiene rubber (BR)-based binders, butylene rubber (IIR)-based binders, acrylate-butadiene rubber (ABR)-based binders, styrene-butadiene rubber (SBR)-based binders, polyvinylidene fluoride (PVdF)-based binders, polytetrafluoroethylene (PTFE)-based binders, polyimide (PI)-based binders and the like. Only one binder may be used alone, or two or more thereof may be used in combination.

### 1.4.2 Negative Electrode Current Collector

As shown in FIG. 1, the negative electrode 40 may include a negative electrode current collector 42 in contact with the negative electrode active material layer 41. The negative electrode current collector 42 may be in contact with the aqueous electrolyte solution 20. It is possible to use, as the negative electrode current collector 42, any material capable of functioning as the negative electrode current collector of the aqueous battery. The negative electrode current collector 42 may be in the form of foil, plate, mesh, perforated metal and foam. The negative electrode current collector 42 may be formed of a metal foil or a metal mesh. In particular, the metal foil is excellent in ease of handling or the like. The negative electrode current collector 42 may be composed of a plurality of foils. Examples of the metal material constituting the negative electrode current collector 42 include those containing at least one element selected from the group consisting of Cu, Ni, Al, V, Au, Pt, Mg, Fe, Ti, Pb, Co, Cr, Zn, Ge, In, Sn, and Zr. In particular, the negative electrode current collector 42 preferably contains at least one selected from the group consisting of Al, Ti, Pb, Zn, Sn, Mg, Zr and In, and preferably contains Al. All of Al, Ti, Pb, Zn, Sn, Mg, Zr and In have low work function, and even if the negative electrode current collector 42 comes into contact with the aqueous electrolyte solution 20 on the reduction potential, it is considered to be difficult for the aqueous electrolyte solution 20 to undergo electrolysis. The negative electrode current collector 42 may be one in which the above metal is plated or vapor-deposited on a metal foil or a base material. When the negative electrode current collector 42 is composed of a plurality of metal foils, the negative electrode current collector may have some layer between the plurality of metal foils. The thickness of the negative electrode current collector 42 is not particularly limited, and may be, for example, 0.1 µm or more or 1 µm or more, and may be 1 mm or less or 100 µm or less.

### 1.5 Other Structures

As mentioned above, in the aqueous battery 100, both the positive electrode current collector 12 and negative electrode current collector 42 may contain Al. In this respect, in the aqueous battery 100, a current collector containing Al may be used as a bipolar current collector which serves as both the positive electrode current collector 12 and the negative electrode current collector 42. Namely, the positive electrode 10 and the negative electrode 40 may share one current collector. FIG. 2 shows an example of a bipolar structure. As shown in FIG. 2, the aqueous battery 100 may have a bipolar structure, and a positive electrode active material layer 11 may be formed on one side of an Al-containing current collector 50 (bipolar current collector which functions as both the positive electrode current collector 12 and negative electrode current collector 42) and a negative electrode active material layer 41 may be formed on the other side of the current collector 50. In this case, the Al-containing current collector 50 may not have liquid permeability, that is, the aqueous electrolyte solution 20 may not permeate from the positive electrode active material layer 11 to the negative electrode active material layer 41 via the current collector 50 and vice versa.

The aqueous battery 100 may include, for example, a known structure as that of a battery, in addition to the above structure. The aqueous battery 100 may include, in addition to the above structure, a terminal, a battery case, and the like. The aqueous battery 100 may be a primary battery or may be a secondary battery. The aqueous battery 100 may be an aqueous proton battery with protons and/or hydroxide ions as carrier ions, or may be an aqueous potassium ion battery with potassium ions as carrier ions. Other structures are obvious to those skilled in the art who refer to the present application, and are therefore explanation will be omitted here.

### 1.6 Method for Producing Aqueous Battery

The method for producing the aqueous battery 100 of the present disclosure is not particularly limited, and is, for example, as follows.
(1) The positive electrode 10 is produced, for example, as follows. A positive electrode active material and etc. constituting the positive electrode active material layer 11 are dispersed in a solvent to obtain a positive electrode mixture paste (slurry). The solvent used in this case is not particularly limited, and water and various organic solvents can be used. Using a doctor blade or the like, the positive electrode mixture paste (slurry) is applied on the surface of the positive electrode current collector 12, and then dried to form a positive electrode active material layer 11 on the surface of the positive electrode current collector 12, thus obtaining a positive electrode 10. It is possible to use, as the coating method, an electrostatic coating method, a dip coating method, a spray coating method and the like, including a doctor blade method.
(2) The aqueous electrolyte solution 20 can be produced, for example, by mixing water with a potassium salt. The mixing method is not particularly limited, and any known mixing method can be used. By simply filling a container with water and a potassium salt, followed by standing, they are mixed with each other to finally obtain an aqueous electrolyte solution 20.
(3) The separator 30 can be produced, for example, by attaching a predetermined affinity substance to a base material such as a nonwoven fabric or a porous film. For example, an affinity substance can be attached to a base material by coating the base material with a solution or slurry containing the affinity substance, or immersing the base material in a solution containing the affinity substance.
(4) The negative electrode 40 is produced, for example, as follows. A negative electrode active material and etc. constituting the negative electrode active material layer 41 are dispersed in a solvent to obtain a negative electrode mixture paste (slurry). The solvent used in this case is not particularly limited, and water and various organic solvents can be used. Using a doctor blade or the like, the negative electrode mixture paste (slurry) is applied on the surface of the negative electrode current collector 42, and then dried to form a negative electrode active material layer 41 on the surface of the negative electrode current collector 42, thus obtaining a negative electrode 40. It is possible to use, as the coating method, an electrostatic coating method, a dip coating method, a spray coating method and the like, including a doctor blade method.
(5) The positive electrode 10, the aqueous electrolyte solution 20, the separator 30 and the negative electrode 40 are housed in a battery case to obtain an aqueous battery 100. For example, the separator 30 is sandwiched between the positive electrode 10 and the negative electrode 40 to obtain a laminate including the positive electrode current collector 12, the positive electrode active material layer 11, the separator 30, the negative electrode active material layer 41 and the negative electrode current collector 42 in this order. Other members such as terminal are attached to the laminate as necessary. The laminate is housed in a battery case and the battery case is filled with the aqueous electrolyte solution 20, and the laminate and the electrolyte solution are sealed in the battery case so that the laminate is immersed in the aqueous electrolyte solution 20 to obtain an aqueous battery 100.

### 1.7 Function·and Effect

As mentioned above, the aqueous battery 100 of the present disclosure includes an aqueous electrolyte solution 20 having no freezing point at -60°C or higher, and thus elution of a current collector into the aqueous electrolyte solution 20 is easily suppressed and the aqueous battery can be appropriately operated even at extremely low temperature in cold district. The aqueous battery 100 of the present disclosure includes a separator 30 high in affinity with the aqueous electrolyte solution 20, and thus the aqueous electrolyte solution 20 appropriately penetrates into the separator 30 and an ionic conduction path between a positive electrode 10 and a negative electrode 40 is appropriately easily ensured.

### 2. Ionic Conductor

The technology of the present disclosure also has an aspect as an ionic conductor including an aqueous electrolyte solution and a separator. Namely, the ionic conductor of the present disclosure has an aqueous electrolyte solution and a separator retaining the aqueous electrolyte solution, the aqueous electrolyte solution contains water and a potassium salt dissolved in the water, the aqueous electrolyte solution has no freezing point at -60°C or higher, and the element constituting the separator contains an element which is the same in type as at least one of elements constituting the anion of the potassium salt. The details of the separator and the aqueous electrolyte solution are as mentioned above.

### 3. Method for Both Suppressing Elution of Current Collector and Ensuring Ionic Conduction Path between Positive and Negative Electrodes in Aqueous Battery

The technology of the present disclosure also has an aspect as a method for both suppressing elution of metal from the current collector into the aqueous electrolyte solution and ensuring an ionic conduction path between positive and negative electrodes in the aqueous battery. Namely, the method of the present disclosure is characterized by using an aqueous electrolyte solution which satisfies the following requirements (1) and (2) and using a separator which satisfies the following requirement (3), in the aqueous battery. The details of the aqueous electrolyte solution and the separator, and other structures of the battery are as mentioned above.
(1) The aqueous electrolyte solution includes water and a potassium salt dissolved in the water.
(2) The aqueous electrolyte solution has no freezing point at -60°C or higher.
(3) At least one element constituting the separator is the same in type as at least one element constituting the anion of the potassium salt.

### 4. Vehicle Having Aqueous Battery

As mentioned above, according to the technology of the present disclosure, an aqueous battery is obtained in which both suppression of elution of metal from the current collector into the aqueous electrolyte solution and securement of an ionic conduction path between positive and negative electrodes are achieved. Such an aqueous battery can be suitably used, for example, in at least one vehicle selected from a hybrid electric vehicle (HEV), a plug in hybrid electric vehicle (PHEV) and a battery electric vehicle (BEV). Namely, the technology of the present disclosure also has an aspect as a vehicle having an aqueous battery, wherein the aqueous battery includes a positive electrode, an aqueous electrolyte solution, a separator and a negative electrode, the aqueous electrolyte solution contains water and a potassium salt dissolved in the water, the aqueous electrolyte solution has no freezing point at -60°C or higher, and at least one element constituting the separator is the same in type as at least one element constituting the anion of the potassium salt. The detail of the aqueous battery is as mentioned above.

### Examples

Hereinafter, the technology of the present disclosure will be described in more detail by way of Examples, but the technology of the present disclosure is not limited to the following Examples.

### 1. Examination of Aqueous Electrolyte Solution

An aqueous battery using an aqueous electrolyte solution is needed to be suppressed in elution of a metal current collector into the aqueous electrolyte solution. An aqueous electrolyte solution allowing for suppression of elution of Al in the case of an Al foil as a metal current collector has been examined as below. The Al foil is merely one example of the current collector. Even when other current collector than the Al foil is used, various effects described below, by the aqueous electrolyte solution, can be expected.

### 1.1 Fabrication of Aqueous Electrolyte Solution

K₄P₂O₇ was dissolved in 1 kg of pure water at a predetermined concentration (0.5 to 5 mol) to obtain an aqueous electrolyte solution for evaluation.

### 1.2 Fabrication of Electrochemical Cell

In an electrochemical cell (VM4, manufactured by EC FRONTIER CO., LTD), an Al foil was used for a working electrode, Pt mesh was used for a counter electrode, Ag/AgCl was used for a reference electrode, and the above aqueous electrolyte solution was used as an electrolyte solution.

### 1.3 Evaluation Conditions

A constant current was applied to an electrochemical cell at 25°C for 30 minutes under the following conditions (1-1) or (1-2). A constant electric potential was applied to the electrochemical cell at 25°C for 30 minutes under the following conditions (2-1) or (2-2). Tests were carried out for each of current and potential on the oxidation side, and current and potential on the reduction side.

### (Oxidation Side)

(1-1) Constant current: 0.1-0.1-0.2-0.3-0.5 mA/cm², for 30 minutes each.

### (OCP for 30 minutes between evaluations)

(2-1) Constant voltage: 1.0→1.1→1.2→1.4→1.6 V (vs. Ag/AgCl), for 30 minutes each

### (OCP for 30 minutes between evaluations)

### (Reduction side)

(1-2) Constant current: -0.1→-0.1→-0.2→-0.3→-0.5 mA/cm², for 30 minutes each

### (OCP for 30 minutes between evaluations)

(2-2) Constant voltage: -1.3→-1.4→-1.5→-1.7→-1.9 V (vs. Ag/AgCl), for 30 minutes each

### (OCP of 30 minutes between evaluations)

### 1.4 Evaluation Results (In the case of Constant Current)

### 1.4.1 Aforementioned Condition 1-1, In the case of 0.5 m Electrolyte Solution

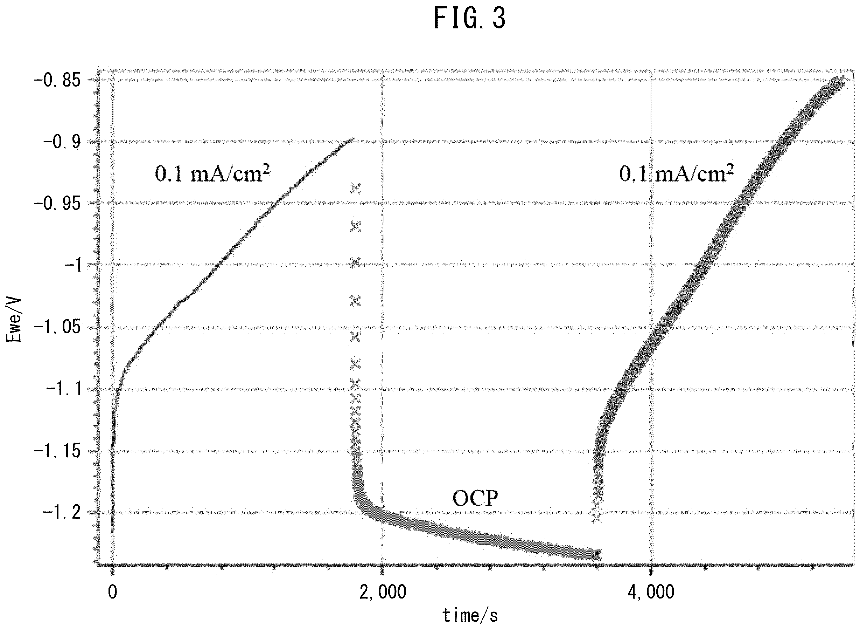

When an oxidation current was applied in an electrochemical cell using a 0.5 mol/kg K₄P₂O₇ aqueous electrolyte solution, an Al foil of an electrode (positive electrode) on the oxidation side disappeared and the electrolyte solution was transformed into a white gel. A potential-pH diagram shows that a standard electrode potential of Al in the aqueous electrolyte solution at pH 11 is about -2.3 V (vs. SHE), so that there is a possibility that Al is eluted (corroded) just by immersing the Al foil in the aqueous electrolyte solution, and it is considered that elution is accelerated by application of a small oxidation current. In fact, as a result of application of the oxidation current using the Al foil, the evaluation surface in contact with the electrolyte solution disappeared completely, which indicates that the protective layer of Al by its original oxide film did not function at all and elution progressed. Main cause of the white gel-like appearance of the electrolyte solution after the evaluation is that eluted Al ions interacted with P₂O₇ ions in the electrolyte solution to precipitate as Al₄(P₂O₇)₃. This suggested that when Al ions interact with P₂O₇ ions, a compound with very low solubility is produced and precipitated as a solid. FIG. 3 shows a time-potential curve when a 0.5 m aqueous electrolyte solution is used and a constant current on the oxidation side is applied.

### 1.4.2 Aforementioned Condition 1-1, In the case of 5 m Electrolyte Solution

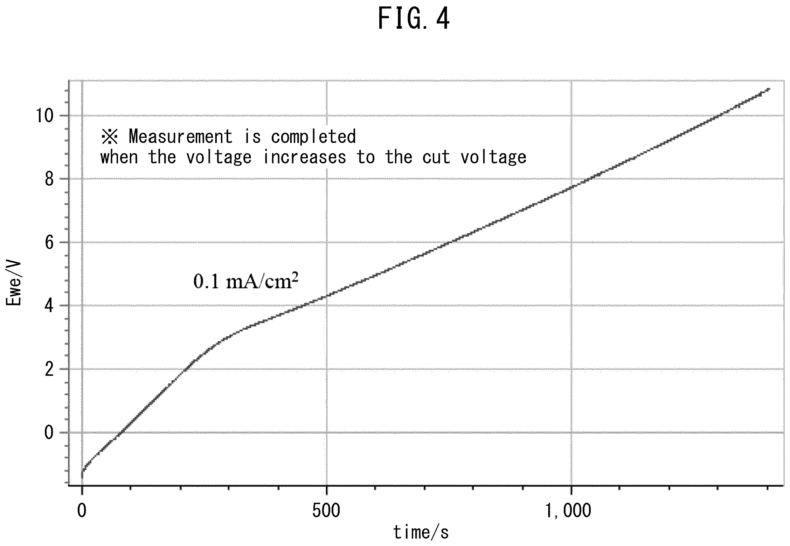

When an oxidation current was applied in an electrochemical cell using a 5 mol/kg K₄P₂O₇ aqueous electrolyte solution, the potential continued to increase with time and reached the cut voltage of the device, causing the evaluation to be interrupted. It is considered that the overvoltage increased due to the passivation of the Al foil surface and gradual electrochemical insulation of the solid-liquid interface. Looking at the Al foil after evaluation, the evaluated surface retained its metallic luster and the aqueous electrolyte solution showed no change at all from the initial state, thus confirming that the state was very different from that in the case of the 0.5 m electrolyte solution. As mentioned above, it has been confirmed that when Al and P₂O₇ ions interact with each other, solid precipitates with very low solubility are generated. In this respect, in the dilute solution such as the above 0.5 m electrolyte solution, it is considered that the dissolved Al ions are once dissolved and diffused using H₂O and OH⁻ as ligands, and then gradually solidified by interacting with P₂O₇ ions, leading to precipitation of solids in the aqueous electrolyte solution. As a result, the solid is deposited and precipitated in the aqueous electrolyte solution, and elution of Al into the electrolyte solution has progressed. In contrast, in the case of the 5 m electrolyte solution, the concentration of P₂O₇ ions in the electrolyte solution was very high, and the discoloration of pH test paper immersed in the electrolyte solution after the below-mentioned evaluation on the reduction side was also slow. Therefore, it is considered that the diffusion action via H₂O and OH⁻ is scarcely exerted, and Al ions eluted from the Al foil promptly interact with P₂O₇ ions before diffusing far away. Therefore, it is considered that the solid is precipitated near the surface of the Al foil, and the solid adheres to the surface of the Al foil to form a passive film (protective film) such as Al₄(P₂O₇)₃, leading to suppression of continuous elution of Al. FIG. 4 shows a time-potential curve when a 5 m aqueous electrolyte solution was used and a constant current on the oxidation side was applied.

### 1.4.3 Aforementioned Condition 1-2, In the case of 1 m Electrolyte Solution

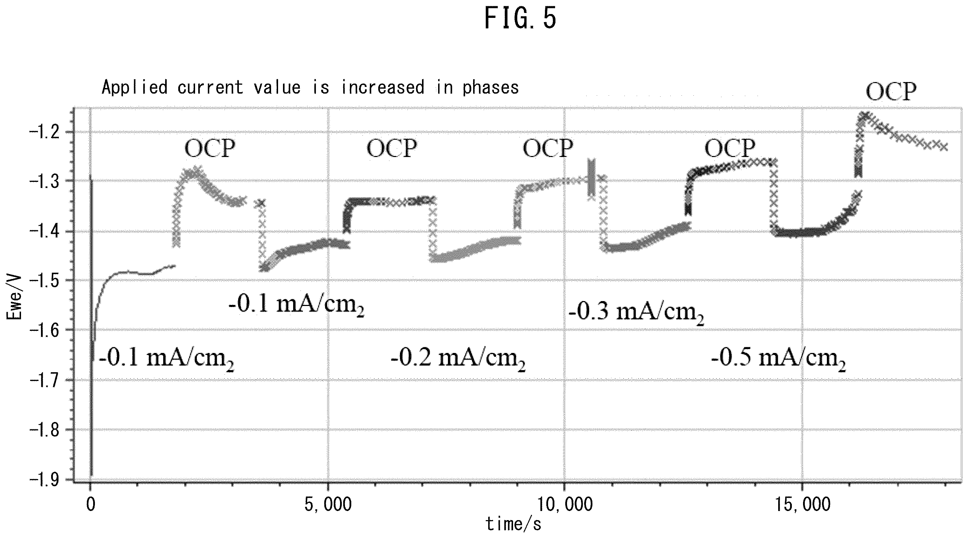

In an ordinary aqueous electrolyte solution, when a reducing current flows, hydrogen gas is generated and the pH of the electrolyte solution increases, as shown in the following formula. Therefore, when an Al foil made of amphoteric metal is used in the electrode (negative electrode) on the reduction side, as the electrolyte solution becomes a strong base with an increase in pH, Al is eluted from the Al foil into the electrolyte solution and thus the Al foil eventually disappears. In fact, when a reducing current was applied in an electrochemical cell using a 1 mol/kg K₄P₂O₇ aqueous electrolyte solution, the Al foil on the electrode (negative electrode) on the reduction side disappeared and the electrolyte solution was transformed into a white gel-like state. This is considered to be due to elution of Al from the Al foil into the electrolyte solution and precipitation of Al₄(P₂O₇)₃ in the electrolyte solution, similar to the case where the oxidation current is applied in the 0.5 m electrolyte solution. FIG. 5 shows a time-potential curve when a 1 m aqueous electrolyte solution was used and a constant current on the reduction side was applied.

2H₂O + 2e- → H₂ + 2OH⁻

### 1.4.4 Aforementioned Condition 1-2, In the case of 5 m Electrolyte Solution

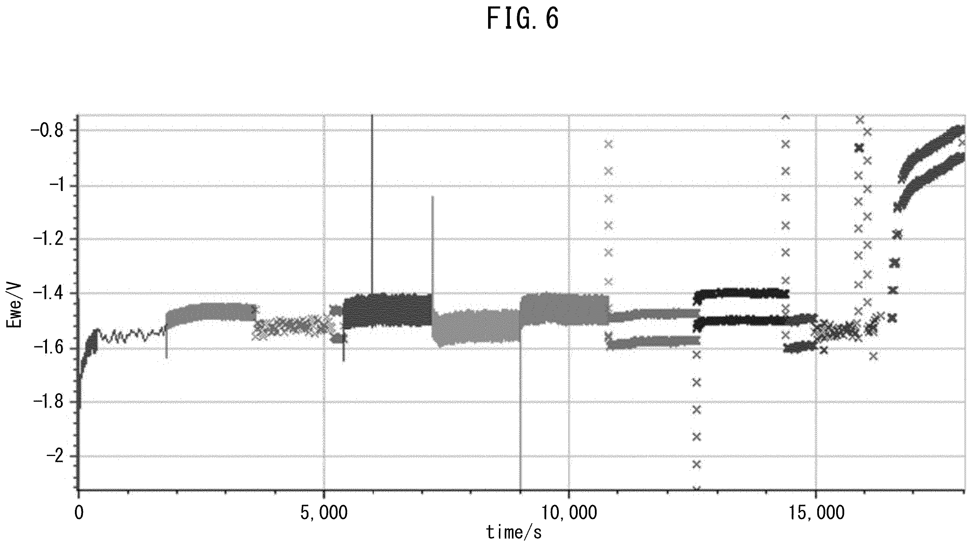

In the 5 mol/kg K₄P₂O₇ aqueous electrolyte solution, Al was not eluted after application of the electric current and retained its original shape, and no change was observed in the electrolyte solution. When a pH test paper was immersed in the electrolyte solution after evaluation, the color did not change immediately after immersion, but gradually changed to purple after a few minutes, indicating pH 14. This suggests that when the electrolyte of the aqueous electrolyte solution is mainly composed of K₄P₂O₇, the electrolyte solution differs from ordinary aqueous solutions in elementary properties, and the diffusion of H₂O and OH⁻ in the solution is very slow, and that Al foil is not eluted even in the presence of such a strong base because a passive film such as Al₄(P₂O₇)₃ was formed on the surface of the Al foil, similar to the evaluation results on the oxidation side mentioned above. FIG. 6 shows a time-potential curve when a 5 m aqueous electrolyte solution is used and a constant current is applied on the reduction side.

### 1.4.5 Supplementation

Comparing the presence or absence of elution of the Al foil into the K₄P₂O₇ aqueous electrolyte solution at each concentration, pitting due to elution of Al was not observed in the electrochemical cell using the aqueous electrolyte solution at a concentration of 4.0 mol/kg or more, where the overvoltage clearly increased on the oxidation side. For the reduction side, slight expansion of the potential (expansion of the potential window) was observed in response to an increase in concentration, but extreme increase in overvoltage did not occur as in the oxidation side. For the reduction side, pitting due to elution of Al was observed in the electrolyte solution at a concentration of a 3 mol/kg or less, but not observed in the electrolyte solution at a concentration of a 4.0 mol/kg or more. On the oxidation side, the Al elution reaction occurred in a neutral to weakly basic solution of pH 11, whereas, on the reduction side, the Al elution reaction occurred after a local increase in pH after the hydrogen generation reaction, resulting in a reaction system with a different pH at the interface between the Al foil and the electrolyte solution. The passive film is considered to have higher solubility in the strong base region than in the neutral region, but if the passive film is dense, dissolution of the passive film is considered to be suppressed. In the electrolyte solution at a concentration of 4.0 mol/kg or more on both the oxidation and reduction sides, it is also considered that a dense passive film is formed on the surface of the Al foil.

### 1.5 Evaluation Results (In the case of Constant Voltage)

### 1.5.1 In the case of Condition 2-1

In each electrochemical cell, when a constant voltage on the oxidation side was applied, the current increased linearly as the applied potential was increased in the electrochemical cell using a low-concentration aqueous electrolyte solution at a concentration of 3.0 mol/kg or less, whereas, in the electrochemical cell using a high-concentration aqueous electrolyte solution of 4.0 mol/kg or more, the current increased linearly as the applied voltage was increased. In the electrochemical cells with high-concentration aqueous electrolyte solution at a concentration of 4.0 mol/kg or more, the current saturated at 1.1 V (vs. Ag/AgCl). This indicates that the current changes in accordance with the normal Ohm's law on the low concentration side, whereas a resistive layer (the passive film mentioned above) is formed on the surface of the Al foil on the high concentration side.

### 1.5.2 In the case of Condition 2-2

In each electrochemical cell, when a constant voltage on the reduction side was applied, the current value increased as the applied potential became lower, but the limit of evaluation was - 1.7 V (vs. Ag/AgCl) in the electrochemical cell using an electrolyte solution at a concentration of less than 5 mol/kg. In the electrochemical cell using an electrolyte solution at a concentration of 5 mol/kg, the limit of evaluation was -1.9 V (vs. Ag/AgCl), however, despite the current value of 300 mA/cm², the surface of the Al foil was only slightly discolored, and no pitting or alteration due to corrosion could be observed. Unlike the oxidation side, no extreme increase in resistance on the Al foil surface was observed on the reduction side, suggesting that the passive film does not become thicker. However, when a high concentration electrolyte solution (for example, high concentration electrolyte solution at a concentration of 4.0 mol/kg or more) was used, it is considered that a passive film sufficient to suppress elution of Al ions was formed in the equilibrium state during potential application, because P₂O₇ ions were present in sufficient activity during elution of Al ions.

### 1.6 Evaluation Assuming Aqueous Battery

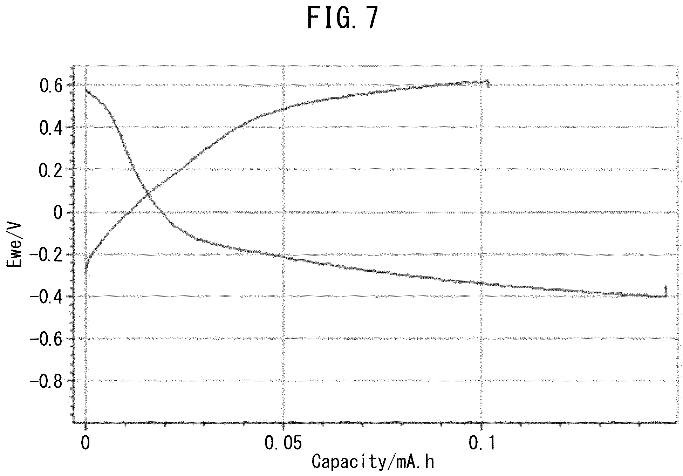

A 5 mol/kg K₂P₂O₇ aqueous solution was prepared as the aqueous electrolyte solution. An Al foil was prepared as a positive electrode current collector. Spinel-type Li-Mn oxide (LiMn₂O₄, a part of Li can be replaced by K by ion exchange during charging and discharging) as a positive electrode active material, acetylene black as a conductive aid, and PVDF and CMC as binders were mixed with each other in a mass ratio of 85:10:4.5:0.5 to fabricate a positive electrode active material mixture. Using a doctor blade, the positive electrode active material mixture was uniformly applied to the surface of the Al foil and then dried to obtain a positive electrode for evaluation. Namely, the positive electrode is that in which a positive electrode active material layer containing a positive electrode active material and etc. is formed on the surface of the Al foil as a positive electrode current collector. In an electrochemical cell (VM4, manufactured by EC FRONTIER CO., LTD), the above positive electrode was used as the working electrode, the above aqueous electrolyte solution was used as the electrolyte solution, Pt mesh was used as the counter electrode, and Ag/AgCl was used as the reference electrode to fabricate an evaluation cell. The evaluation cell thus formed was charged and discharged at 0.1 mA for 1 hour for charging and at -0.1 mA for discharging under the conditions of a cut potential of -0.4 V vs. Ag/AgCl, thus obtaining a charge-discharge curve. The results are shown in FIG. 7. As shown in FIG. 7, it can be confirmed that sufficient conductivity is ensured between the active material and the Al foil when charging/discharging is performed after coating and forming the electrode, and that a passive film is difficult to form between the solid and the solid, such as between the active material and the Al foil. Namely, in the aqueous battery, it is considered that the adverse effect due to formation of the passive film is not substantially exerted.

### 1.7 Summary

As is apparent from above results, when an aqueous electrolyte solution in which K₂P₂O₇ is dissolved is used as the electrolyte, it is possible to perform charging and discharge of the active material while suppressing elution of a current collector at the oxidation and reduction potentials if the concentration of K₂P₂O₇ is a high concentration equal to or more a certain concentration.

### 1.8 Further Examination of Aqueous Electrolyte Solution

In the above, an examination was made of the case where only K₂P₂O₇ is dissolved in pure water as an electrolyte in an aqueous electrolyte solution. As a result, it has been found that when the concentration of K₂P₂O₇ is a high concentration of 4.0 mol/kg or more, elution of a current collector at the oxidation and reduction potentials is suppressed by the formation of a passive film on the surface of the current collector. However, such a concentration of "4.0 mol/kg" is not necessarily the minimum concentration required to suppress elution of the current collector. For example, if other electrolyte and/or any additive are/is dissolved together with K₂P₂O₇ in the aqueous electrolyte solution, there is a possibility that elution of the current collector at the oxidation and reduction potentials can be suppressed even if the concentration of K₂P₂O₇ is less than 4.0 mol/kg. Namely, if two conditions:
(1) Metal ions eluted from the current collector into the aqueous electrolyte solution interact with anions (for example, P₂O₇ ions) derived from a potassium salt and are precipitated as an insoluble compound, and
(2) The insoluble compound is precipitated in the vicinity of the current collector and adheres to the surface of the current collector to form a passive film (the eluted metal does not diffuse far from the current collector via H₂O and OH⁻);
can be satisfied, elution of the current collector at the oxidation and reduction potentials is considered to be suppressed even if the concentration of K₂P₂O₇ is less than 4.0 mol/kg in the aqueous electrolyte solution. The inventors have investigated the difference between the physical properties of an aqueous electrolyte solution in which elution of the current collector can be suppressed by satisfaction of the conditions (1) and (2) and the physical properties of an aqueous electrolyte solution in which elution of the current collector cannot be suppressed due to no satisfaction of the conditions (1) and (2), by various tests.

### 1.8.1 Fabrication of Aqueous Electrolyte Solution

K₄P₂O₇ was dissolved in 1 kg of pure water at a predetermined concentration (0.5 to 7 mol) to obtain an aqueous electrolyte solution for evaluation.

### 1.8.2 Confirmation by DSC

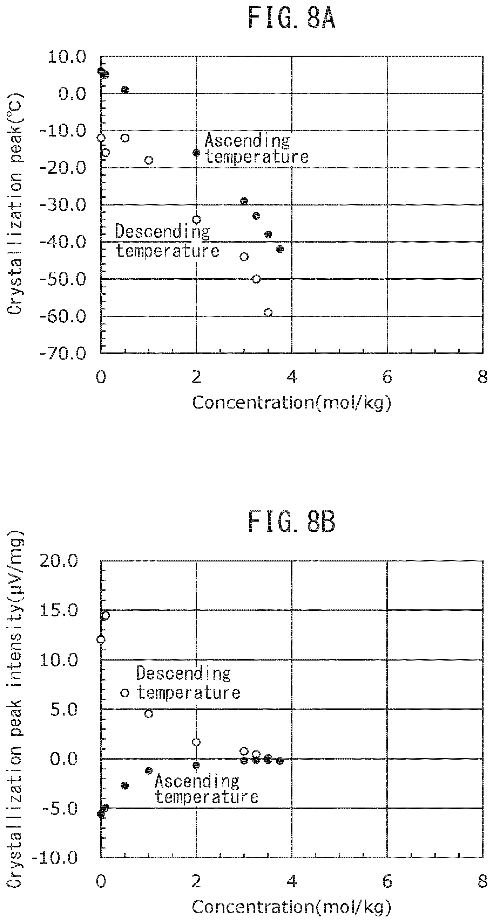

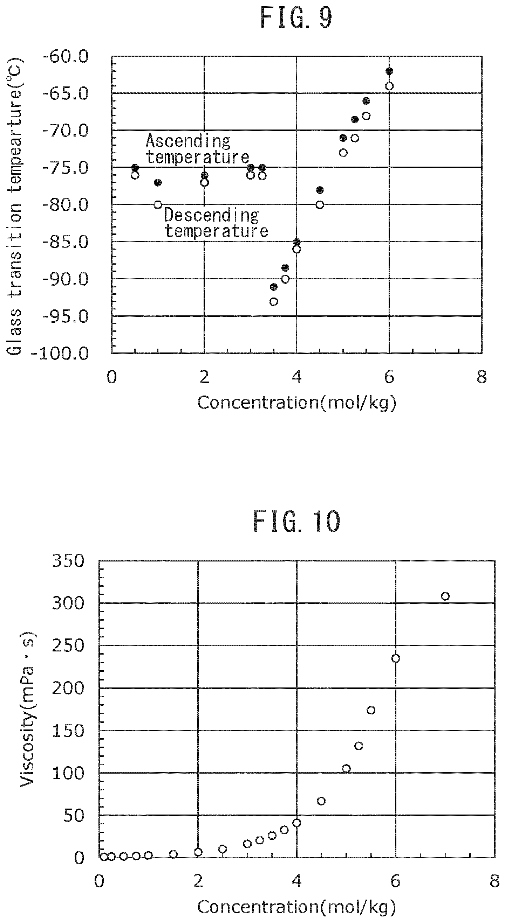

The crystallization peak temperature (freezing point temperature) and glass transition temperature of each aqueous electrolyte solution were confirmed by differential scanning calorimetry (DSC). Note that the DSC sweep rate was set at 5°C/min for both descending temperature and ascending temperature, and the sweep range was set as follows: temperature descending to -120°C from room temperature, followed by temperature ascending to 40°C. The atmosphere in DSC was an atmosphere of Ar, and the pressure was equal to the atmospheric pressure. However, since a sealed aluminum container was used for the evaluation, the atmosphere inside the container was the sealed atmosphere under atmospheric pressure. FIG. 8A shows the relationship between the concentration and the crystallization peak temperature (freezing point) of an aqueous electrolyte solution. FIG. 8B shows the relationship between the concentration and the crystallization peak intensity of an aqueous electrolyte solution. FIG. 9 shows the relationship between the concentration and the glass transition temperature of an aqueous electrolyte solution.

As is apparent from the results shown in FIG. 8A and FIG. 8B, when the concentration of K₄P₂O₇ in the aqueous electrolyte solution is 4.0 mol/kg or more, there is no crystallization peak in DSC, that is, the aqueous electrolyte solution has no freezing point at -60°C or higher. As is apparent from the results shown in FIG. 9, the glass transition temperature changes specifically when the concentration of K₄P₂O₇ in the aqueous electrolyte solution is around 4.0 mol/kg.

These results suggest that when the concentration of K₄P₂O₇ in the aqueous electrolyte solution is 4.0 mol/kg or more, the solution structure (clusters, networks, etc.) is significantly changed due to the disappearance of interactions between H₂O molecules. For example, it is thought that H₂O molecules are surrounded by ions and aggregates (associations) derived from K₄P₂O₇, and the network (in particular, network derived from anions) derived from K₄P₂O₇ becomes stronger, and H₂O molecules can no longer form a crystallization network with each other.

In other words, if "aqueous electrolyte solution in which a potassium salt is dissolved has no freezing point at -60°C or higher", it can be said that the eluted metal from the current collector can react with anions derived from the potassium salt, and the network of H₂O molecules and OH⁻ required for the eluted metal to diffuse in the solution is absent, and that the above two conditions, that is:
(1) Metal ions eluted from the current collector into the aqueous electrolyte solution interact with anions (for example, P₂O₇ ions) derived from the potassium salt and are precipitated as an insoluble compound; and
(2) The insoluble compound is precipitated in the vicinity of the current collector and adheres to the surface of the current collector to form a passive film (the eluted metal does not disuse far from the current collector via H₂O and OH⁻)
can be satisfied. For example, even if the concentration of K₄P₂O₇ in the aqueous electrolyte solution is less than 4.0 mol/kg, the above conditions (1) and (2) can be satisfied by dissolving other electrolytes and additives so that "the aqueous electrolyte solution has no freezing point at - 60°C or higher", the conditions (1) and (2) above are considered to be satisfied.

### 1.8.3 Presence or Absence of Salt Precipitation after Cooling

Each aqueous electrolyte solution was cooled from 0°C to -60°C, and the presence or absence of salt precipitation was checked by DSC. As a result, no peaks originating from salt precipitation were observed in any of the aqueous electrolyte solution concentrations.

Among conventional highly concentrated aqueous electrolyte solutions, there are those in which the amount of dissolvable electrolyte varies greatly depending on temperature, and salts are easily precipitated by temperature changes. For example, a highly concentrated lithium imide salt solution known as an aqueous electrolyte solution for aqueous lithium ion batteries, and a highly concentrated sodium imide salt solution known as an aqueous electrolyte solution for aqueous sodium ion batteries, precipitate salt when the temperature drops from room temperature by several degrees, and there is concern that the precipitated salt may inhibit battery reaction. In contrast, the aqueous electrolyte solution for aqueous batteries in this example can be used in various environments as a stable electrolyte solution that does not freeze at extremely low temperatures and does not cause salt precipitation, as mentioned above.

### 1.8.4 Confirmation of Viscosity

The viscosity of each aqueous electrolyte solution at 20°C was confirmed. The viscosity was measured using a laboratory vibration viscometer (MODEL VM-10A-L, VM-10A-M, SEKONIC). FIG. 10 shows the relationship between the concentration and viscosity of the aqueous electrolyte solution. As shown in FIG. 10, viscosity increases rapidly when the concentration of K₄P₂O₇ in the aqueous electrolyte solution is 4.0 mol/kg or more. For example, from the viewpoint of suppressing deterioration of the ionic conductivity, the smaller the viscosity of the aqueous electrolyte solution, the better. For example, if the concentration of K₄P₂O₇ is 7.0 mol/kg or less, the viscosity does not increase excessively and is suitable.

### 1.9 Conclusion about Aqueous Electrolyte Solution

From the above results, it can be said that when an aqueous battery is formed, it is possible to suppress elution of metal from the current collector into the aqueous electrolyte solution at the oxidation and reduction potentials if the aqueous electrolyte solution meets the following requirements (A) and (B).
(A) The aqueous electrolyte solution contains water and a potassium salt dissolved in the water.
(B) The aqueous electrolyte solution has no freezing point at -60°C or higher.

### 2. Examination about Separator

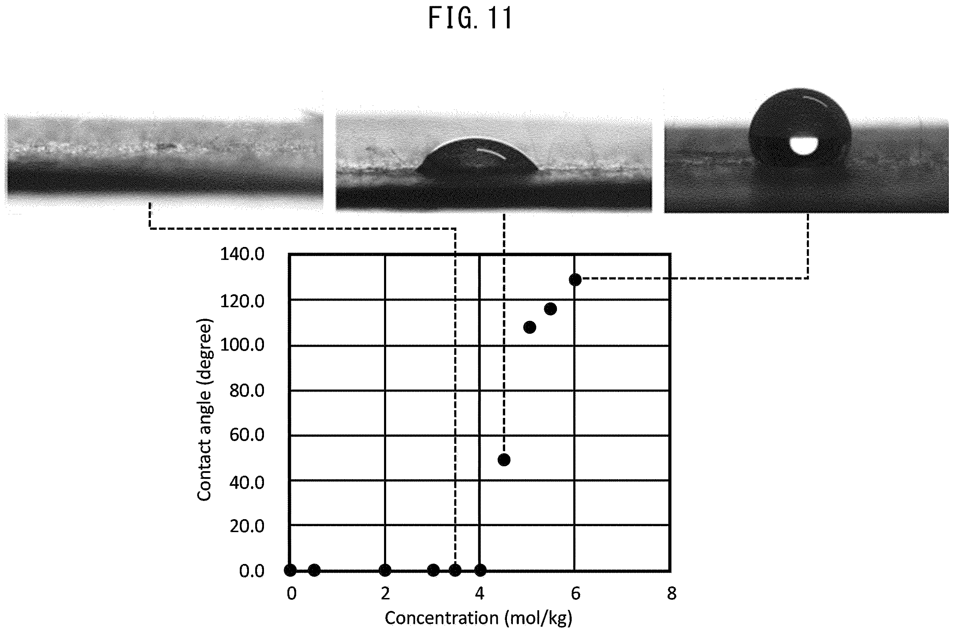

It is necessary for constituting an aqueous battery with the aqueous electrolyte solution to examine a separator to be combined with the aqueous electrolyte solution. The inventors have observed the presence or absence of penetration of the aqueous electrolyte solution (aqueous solution of K₄P₂O₇) into a cellulose-based nonwoven fabric as a common separator for aqueous batteries in dropping of the aqueous electrolyte solution into the cellulose-based nonwoven fabric. FIG. 11 shows the relationship between the concentration of K₄P₂O₇ in the aqueous electrolyte solution and the contact angle of the aqueous electrolyte solution on the surface of the cellulose-based nonwoven fabric. The contact angle shown in FIG. 11 is the contact angle after a lapse of 10 minutes from dropping of the aqueous electrolyte solution onto the surface of the cellulose-based nonwoven fabric. As shown in FIG. 11, it can be seen that the aqueous electrolyte solution does not penetrate into the cellulose-based nonwoven fabric and the aqueous electrolyte solution is repelled on the surface of the cellulose-based nonwoven fabric when the concentration of K₄P₂O₇ in the aqueous electrolyte solution is 4.0 mol/kg or more.

As mentioned above, when the concentration of K₄P₂O₇ in the aqueous electrolyte solution is 4.0 mol/kg or more, the aqueous electrolyte solution has no freezing point at -60°C or higher. Namely, freezable free H₂O molecules are decreased. More specifically, it is considered that an anion network structure called Water-in-salt is formed in the aqueous electrolyte solution and a network of H₂O molecules disappears. Namely, it can be said that the aqueous electrolyte solution having no freezing point at -60°C or higher is largely different from an aqueous electrolyte solution having a freezing point at -60°C or higher in terms of properties and is largely different therefrom in terms of affinity with a separator. As shown in FIG. 11, it is difficult to allow the aqueous electrolyte solution having no freezing point at -60°C or higher to appropriately penetrate into a conventionally common separator for aqueous batteries.

### 2.1 Evaluation of Wettability of Aqueous Electrolyte Solution to Separator

It is considered that an increase in affinity of a separator with a network structure of anions contained in an aqueous electrolyte solution is important for allowing the aqueous electrolyte solution to penetrate into the separator. According to this consideration, various substances were each attached onto a conventional separator and then the wettability of the aqueous electrolyte solution to the separator was observed. The aqueous electrolyte solution here used was an aqueous solution containing K₄P₂O₇ at a concentration of 5 mol/kg.

### 2.1.1 Comparative Example 1

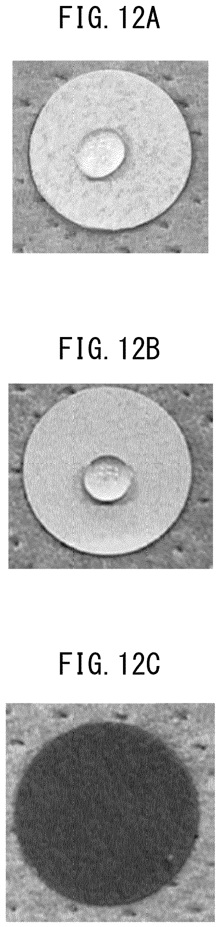

A cellulose-based nonwoven fabric for aqueous batteries was prepared as a separator according to Comparative Example 1. The aqueous electrolyte solution was dropped onto the surface of the separator, and the contact angle was measured based on the shape of a droplet on the surface of the separator, with a contact angle meter. The contact angle was measured both immediately after dropping (within 30 seconds) and after a lapse of 10 minutes from dropping. The results are shown in Table 1 below. The state of the droplet after a lapse of 10 minutes from dropping is shown in FIG. 12A.

### 2.1.2 Comparative Example 2

A separator according to Comparative Example 2 was obtained by coating the cellulose-based nonwoven fabric according to Comparative Example 1, with a strontium fluoride (SrF₂) powder. The aqueous electrolyte solution was dropped onto the surface of the separator and the contact angle of the droplet was measured in the same manner as in Comparative Example 1. The results are shown in Table 1 below. The state of the droplet after a lapse of 10 minutes from dropping is shown in FIG. 12B.

### 2.1.3 Example 1

A separator according to Example 1 was obtained by coating the cellulose-based nonwoven fabric according to Comparative Example 1, with a magnesium pyrophosphate (Mg₂P₂O₇) powder. The aqueous electrolyte solution was dropped onto the surface of the separator and the contact angle of the droplet was measured in the same manner as in Comparative Example 1. The results are shown in Table 1 below. The state of the droplet after a lapse of 10 minutes from dropping is shown in FIG. 12C.

### 2.1.4 Example 2

A separator according to Example 2 was obtained by coating the cellulose-based nonwoven fabric according to Comparative Example 1, with a magnesium hydroxide (Mg(OH)₂) powder. The aqueous electrolyte solution was dropped onto the surface of the separator and the contact angle of the droplet was measured in the same manner as in Comparative Example 1. The results are shown in Table 1 below.

### 2.1.5 Example 3

A separator according to Example 3 was obtained by coating the cellulose-based nonwoven fabric according to Comparative Example 1, with a titanium oxide (TiO₂) powder. The aqueous electrolyte solution was dropped onto the surface of the separator and the contact angle of the droplet was measured in the same manner as in Comparative Example 1. The results are shown in Table 1 below.

### 2.1.6 Example 4

A separator according to Example 4 was obtained by coating the cellulose-based nonwoven fabric according to Comparative Example 1, with a zirconium hydroxide (Zr(OH)₄) powder. The aqueous electrolyte solution was dropped onto the surface of the separator and the contact angle of the droplet was measured in the same manner as in Comparative Example 1. The results are shown in Table 1 below.

### 2.1.7 Example 5

A phosphoric acid ester-based surfactant (manufactured by Tokyo Chemical Industry Co., Ltd., mixture of phosphoric acid 2-ethylhexyl monoester and diester) was added to ethanol at a concentration of 1% by weight, thereby providing a treatment liquid. The cellulose-based nonwoven fabric according to Comparative Example 1 was brought into contact with the resulting treatment liquid and then dried to allow the surfactant to be attached to the nonwoven fabric, thereby providing a separator according to Example 5. The aqueous electrolyte solution was dropped onto the surface of the separator and the contact angle of the droplet was measured in the same manner as in Comparative Example 1. The results are shown in Table 1 below.

### 2.1.8 Comparative Example 3

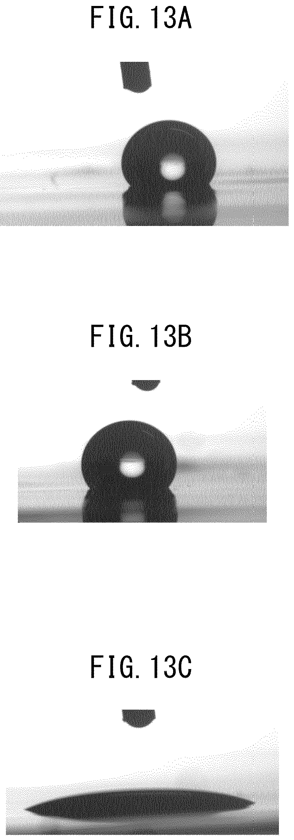

A porous film made of polypropylene was prepared as a separator according to Comparative Example 3. The aqueous electrolyte solution was dropped onto the surface of the separator and the contact angle of the droplet was measured in the same manner as in Comparative Example 1. The results are shown in Table 1 below. The state of the droplet after a lapse of 10 minutes from dropping is shown in FIG. 13A.

### 2.1.9 Comparative Example 4

A fluorine-based surfactant was added to ethanol at a concentration of 1% by weight, thereby providing a treatment liquid. The same porous film made of polypropylene as that in Comparative Example 3 was immersed in the resulting treatment liquid for 5 minutes. After immersion, washing with ultrapure water and then air drying were carried out, and a separator according to Comparative Example 4 was obtained. The aqueous electrolyte solution was dropped onto the surface of the separator and the contact angle of the droplet was measured in the same manner as in Comparative Example 1. The results are shown in Table 1 below. The state of the droplet after a lapse of 10 minutes from dropping is shown in FIG. 13B.

### 2.1.10 Example 6

A separator according to Example 6 was obtained by treating a porous film made of polypropylene in the same manner as in Comparative Example 4 except that a phosphoric acid ester-based surfactant (manufactured by Tokyo Chemical Industry Co., Ltd., a mixture of phosphoric acid 2-ethylhexyl monoester and diester) was added to ethanol at a concentration of 1% by weight, thereby providing a treatment liquid. The aqueous electrolyte solution was dropped onto the surface of the separator and the contact angle of the droplet was measured in the same manner as in Comparative Example 1. The results are shown in Table 1 below. The state of the droplet after a lapse of 10 minutes from dropping is shown in FIG. 13C.

### 2.1.11 Example 7

A separator according to Example 7 was obtained by coating the porous film made of polypropylene according to Comparative Example 3, with a magnesium pyrophosphate (Mg₂P₂O₇) powder. The aqueous electrolyte solution was dropped onto the surface of the separator and the contact angle of the droplet was measured in the same manner as in Comparative Example 1. The results are shown in Table 1 below.

### 2.1.12 Example 8

A separator according to Example 8 was obtained by coating the porous film made of polypropylene according to Comparative Example 3, with a calcium pyrophosphate (Ca₂P₂O₇) powder. The aqueous electrolyte solution was dropped onto the surface of the separator and the contact angle of the droplet was measured in the same manner as in Comparative Example 1. The results are shown in Table 1 below.

### 2.1.13 Example 9

A separator according to Example 9 was obtained by coating the porous film made of polypropylene according to Comparative Example 3, with a strontium titanate (SrTiO₃) powder. The aqueous electrolyte solution was dropped onto the surface of the separator and the contact angle of the droplet was measured in the same manner as in Comparative Example 1. The results are shown in Table 1 below.

### 2.1.14 Example 10

A separator according to Example 10 was obtained by coating the porous film made of polypropylene according to Comparative Example 3, with a calcium sulfate (CaSO₄) powder. The aqueous electrolyte solution was dropped onto the surface of the separator and the contact angle of the droplet was measured in the same manner as in Comparative Example 1. The results are shown in Table 1 below.

### 2.1.15 Evaluation Results

Table 1 below shows the measurement results of the contact angle of the aqueous electrolyte solution on the separator surface in each of Examples and Comparative Examples above.

**Table 1**

| | Type of separator | Treatment substance | Contact angle (immediately after dropping) | Contact angle (after 10 minutes) |
|---|---|---|---|---|
| Comparative Example 1 | Nonwoven fabric | None | 125° | 117° |
| Comparative Example 2 | Nonwoven fabric | SrF2 | 132° | 113° |
| Example 1 | Nonwoven fabric | Mg₂P₂O₇ | 86° | 0° |
| Example 2 | Nonwoven fabric | Mg(OH)2 | 135° | 0° |
| Example 3 | Nonwoven fabric | TiO2 | 138° | 0° |
| Example 4 | Nonwoven fabric | Zr(OH)4 | 108° | 0° |
| Example 5 | Nonwoven fabric | Phosphoric acid ester-based surfactant | 0° | 0° |
| Comparative Example 3 | PP film | None | 128° | 123° |
| Comparative Example 4 | PP film | Fluorine-based surfactant | 138° | 129° |
| Example 6 | PP film | Phosphoric acid ester-based surfactant | 45° | 30° |
| Example 7 | PP film | Mg₂P₂O₇ | 86° | 0° |
| Example 8 | PP film | Ca₂P₂O₇ | 125° | 0° |
| Example 9 | PP film | SrTiO3 | 140° | 0° |
| Example 10 | PP film | CaSO4 | 100° | 76° |

It can be said from the results shown in Table 1, FIGS. 12A to C and FIGS. 13A to C that a separator satisfying the following requirement (C) can allow the aqueous electrolyte solution to easily penetrate into the inside of the separator.
(C) At least one element constituting the separator is the same in type as at least one element constituting the anion of the potassium salt dissolved in the aqueous electrolyte solution.

The inventors have carried out the same experiment with various treatment substances other than those in Examples and Comparative Examples. As a result, it has been found that when the following requirement (D-1) is satisfied, the aqueous electrolyte solution can be allowed to gradually penetrate into the inside of the separator. Namely, it can be said that the aqueous electrolyte solution can be allowed to penetrate into the separator also in Comparative Example 2 above, although a long time is taken. Namely, the treatment substance in Comparative Example 2 can be used as long as time requirements in aqueous battery production are small.
(D-1) The contact angle θ₁ of a droplet after a lapse of 10 minutes from dropping of the aqueous electrolyte solution onto the separator is less than 115° and the ratio θ₁/θ₂ of the contact angle θ₁ after a lapse of 10 minutes to the contact angle θ₂ immediately after dropping (within 30 seconds) is 0.90 or less.

It can be here said that the separator satisfying the above-mentioned requirement (C) allows the following requirement (D-2) to be easily satisfied and allows the aqueous electrolyte solution to penetrate into the separator in a short time.
(D-2) The contact angle θ₁ after a lapse of 10 minutes from dropping of the aqueous electrolyte solution onto the separator is 0°.

### 2.2 Observation of Surface of Separator

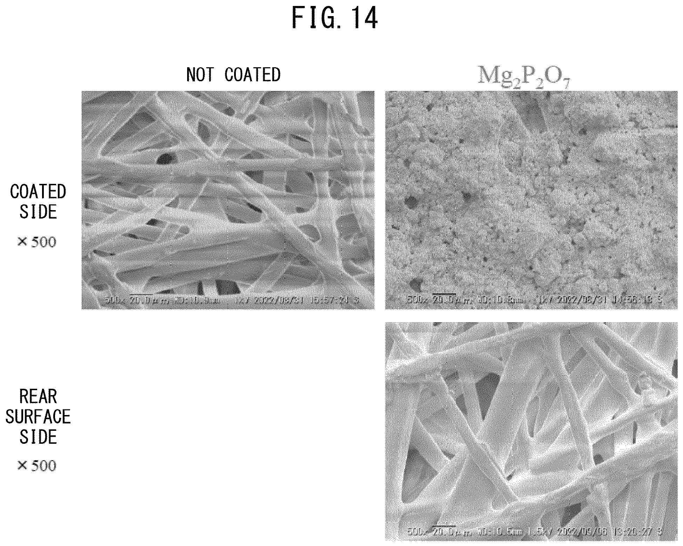

Properties of the respective surfaces of the separator according to Comparative Example 1 and the separator according to Example 1 were observed with SEM. The results are shown in FIG. 14. As shown in FIG. 14, the Mg₂P₂O₇ powder was deposited on the surface coated with Mg₂P₂O₇, of the separator according to Example 1. It was found that fine voids through which the aqueous electrolyte solution was permeable were also present in the surface coated with Mg₂P₂O₇, of the separator according to Example 1.

### 2.3 Evaluation of Ion Conductivity in the case of Formation of Electrochemical Cell

A Ni foil was used for each of a working electrode and a counter electrode, an aqueous solution of 1, 3 or 5 mol/kg K₂P₂O₇ was used as an electrolyte solution, and any of the following (I) to (III) was used as a separator in an electrochemical cell (SB8, manufactured by EC FRONTIER CO., LTD.).
(I) Cellulose-based nonwoven fabric
(II) Cellulose-based nonwoven fabric with one surface coated with Mg₂P₂O₇
(III) Cellulose-based nonwoven fabric with both surfaces with Mg₂P₂O₇

The resistance of the electrochemical cell was measured at a temperature of 25°C in a voltage range of ±10 mV and a frequency range of 1-1 MHz. The same experiment was carried out with the changes in type of the separator and in concentration of the aqueous electrolyte solution. Table 2 below shows the type of the separator, the concentration of the aqueous electrolyte solution, and the resistance value of the electrochemical cell.

**Table 2**

| | Type of separator | Concentration of electrolyte solution mol/kg | Resistance value Ω |
|---|---|---|---|
| Comparative Example A | (I) | 1 | 3.87 |
| Comparative Example B | (I) | 3 | 3.61 |
| Comparative Example C | (I) | 5 | Unmeasurable |
| Comparative Example D | (II) | 1 | Unmeasurable |
| Comparative Example E | (II) | 3 | Unmeasurable |
| Example A | (II) | 5 | 11.04 |
| Example B | (III) | 5 | 8.9 |

### 3. Conclusion

It can be said from the foregoing results that when an aqueous electrolyte solution satisfying the following requirements (A) and (B) is used in an aqueous battery, a separator satisfying the following requirement (C) is combined to improve the wettability of the aqueous electrolyte solution to the separator, allow the aqueous electrolyte solution to appropriately penetrate into the inside of the separator, and ensure an ionic conduction path between a positive electrode and a negative electrode.
(A) The aqueous electrolyte solution contains water and a potassium salt dissolved in the water.
(B) The aqueous electrolyte solution has no freezing point at -60°C or higher.
(C) At least one element constituting the separator is the same in type as at least one element constituting the anion of the potassium salt dissolved in the aqueous electrolyte solution.

### 4. Supplementation

In order to observe performances of the aqueous electrolyte solution and the separator in Examples above, a simple electrochemical cell was formed and evaluated. Needless to say, when an aqueous battery is formed with the aqueous electrolyte solution and the separator, appropriate positive electrode and negative electrode may be combined depending on the potential window and the like of the aqueous electrolyte solution.

### Reference Signs List

10 positive electrode
11 positive electrode active material layer
12 positive electrode current collector
20 aqueous electrolyte solution
30 separator
40 negative electrode
41 negative electrode active material layer
42 negative electrode current collector
100 aqueous battery

## Claims

1. An aqueous battery comprising a positive electrode, an aqueous electrolyte solution, a separator and a negative electrode, wherein
the aqueous electrolyte solution contains water and a potassium salt dissolved in the water, the aqueous electrolyte solution has no freezing point at -60°C or higher, and
at least one element constituting the separator is the same in type as at least one element constituting an anion of the potassium salt.

2. The aqueous battery according to claim 1, wherein
the potassium salt comprises a phosphoric acid salt, and
the separator has a phosphoric acid group or a hydroxyl group.

3. The aqueous battery according to claim 2, wherein
the potassium salt comprises a pyrophosphoric acid salt.

4. The aqueous battery according to any one of claims 1 to 3, wherein
the separator comprises a base material and an affinity substance attached to the base material, the base material is a nonwoven fabric or a porous film, and
at least one element constituting the affinity substance is the same in type as at least one element constituting an anion of the potassium salt.

5. The aqueous battery according to claim 4, wherein
the potassium salt comprises a phosphoric acid salt, and
the affinity substance has a phosphoric acid group or a hydroxyl group.

6. The aqueous battery according to claim 5, wherein
the affinity substance comprises magnesium phosphate.

7. The aqueous battery according to claim 5 or 6, wherein
the affinity substance comprises a phosphoric acid ester.

8. The aqueous battery according to any one of claims 1 to 7, wherein
the aqueous electrolyte solution comprises the potassium salt dissolved at a concentration of 4.0 mol or more and 7.0 mol or less per 1 kg of the water.

9. The aqueous battery according to any one of claims 1 to 8, wherein
the aqueous electrolyte solution contains the water and potassium ions,
a molar ratio (H₂O/K) of the water to the potassium ions is 3.5 or less, and
the aqueous electrolyte solution contains the water and potassium pyrophosphate dissolved in the water.

10. The aqueous battery according to any one of claims 1 to 9, wherein
a pH of the aqueous electrolyte solution is 3 or more and 13 or less.

11. The aqueous battery according to any one of claims 1 to 10, wherein
the aqueous electrolyte solution does not involve salt precipitation when cooled from 0°C to - 60°C.

12. The aqueous battery according to any one of claims 1 to 11, wherein
a viscosity at 20°C of the aqueous electrolyte solution is 10 mPa·s or more and 600 mPa·s or less.

## Patentansprüche

1. Wässrige Batterie, umfassend eine positive Elektrode, eine wässrige Elektrolytlösung, einen Separator und eine negative Elektrode, wobei
die wässrige Elektrolytlösung Wasser und ein in dem Wasser gelöstes Kaliumsalz enthält,
die wässrige Elektrolytlösung keinen Gefrierpunkt bei - 60 °C oder darüber aufweist und
mindestens ein Element, das den Separator bildet, von der gleichen Art wie mindestens ein Element ist, das ein Anion des Kaliumsalzes bildet.

2. Wässrige Batterie nach Anspruch 1, wobei
das Kaliumsalz ein Phosphorsäuresalz umfasst und
der Separator eine Phosphorsäuregruppe oder eine Hydroxylgruppe aufweist.

3. Wässrige Batterie nach Anspruch 2, wobei
das Kaliumsalz ein Pyrophosphorsäuresalz umfasst.

4. Wässrige Batterie nach einem der Ansprüche 1 bis 3, wobei
der Separator ein Basismaterial und eine Affinitätssubstanz umfasst, die an das Basismaterial gebunden ist,
das Basismaterial ein Vliesstoff oder eine poröse Folie ist und
mindestens ein Element, das die Affinitätssubstanz bildet, von der gleichen Art wie mindestens ein Element ist, das ein Anion des Kaliumsalzes bildet.

5. Wässrige Batterie nach Anspruch 4, wobei
das Kaliumsalz ein Phosphorsäuresalz umfasst und
die Affinitätssubstanz eine Phosphorsäuregruppe oder eine Hydroxylgruppe aufweist.

6. Wässrige Batterie nach Anspruch 5, wobei
die Affinitätssubstanz Magnesiumphosphat umfasst.

7. Wässrige Batterie nach Anspruch 5 oder 6, wobei
die Affinitätssubstanz einen Phosphorsäureester umfasst.

8. Wässrige Batterie nach einem der Ansprüche 1 bis 7, wobei
die wässrige Elektrolytlösung das Kaliumsalz gelöst in einer Konzentration von 4,0 mol oder mehr und 7,0 mol oder weniger pro 1 kg Wasser umfasst.

9. Wässrige Batterie nach einem der Ansprüche 1 bis 8, wobei
die wässrige Elektrolytlösung das Wasser und Kaliumionen enthält,
ein Molverhältnis (H₂O/K) des Wassers zu den Kaliumionen 3,5 oder weniger beträgt und
die wässrige Elektrolytlösung das Wasser und Kaliumpyrophosphat gelöst in dem Wasser enthält.

10. Wässrige Batterie nach einem der Ansprüche 1 bis 9, wobei
ein pH-Wert der wässrigen Elektrolytlösung 3 oder mehr und 13 oder weniger beträgt.

11. Wässrige Batterie nach einem der Ansprüche 1 bis 10, wobei
die wässrige Elektrolytlösung beim Abkühlen von 0 °C auf -60 °C keine Salzfällung bedingt.

12. Wässrige Batterie nach einem der Ansprüche 1 bis 11, wobei
eine Viskosität der wässrigen Elektrolytlösung bei 20 °C 10 MPa·S oder mehr und 600 MPa·S oder weniger beträgt.

## Revendications

1. Batterie aqueuse comprenant une électrode positive, une solution aqueuse d'électrolyte, un séparateur et une électrode négative, dans laquelle
la solution aqueuse d'électrolyte contient de l'eau et un sel de potassium dissous dans l'eau,
la solution aqueuse d'électrolyte n'a pas de point de congélation à -60 °C ou plus, et
au moins un élément constituant le séparateur est du même type qu'au moins un élément constituant un anion du sel de potassium.

2. Batterie aqueuse selon la revendication 1, dans laquelle
le sel de potassium comprend un sel d'acide phosphorique, et
le séparateur comporte un groupe acide phosphorique ou un groupe hydroxyle.

3. Batterie aqueuse selon la revendication 2, dans laquelle
le sel de potassium comprend un sel d'acide pyrophosphorique.

4. Batterie aqueuse selon l'une quelconque des revendications 1 à 3, dans laquelle
le séparateur comprend un matériau de base et une substance d'affinité attachée au matériau de base,
le matériau de base est un non-tissé ou un film poreux, et
au moins un élément constituant la substance d'affinité est du même type qu'au moins un élément constituant un anion du sel de potassium.

5. Batterie aqueuse selon la revendication 4, dans laquelle
le sel de potassium comprend un sel d'acide phosphorique, et
la substance d'affinité comporte un groupe acide phosphorique ou un groupe hydroxyle.

6. Batterie aqueuse selon la revendication 5, dans laquelle
la substance d'affinité comprend du phosphate de magnésium.

7. Batterie aqueuse selon la revendication 5 ou 6, dans laquelle
la substance d'affinité comprend un ester d'acide phosphorique.

8. Batterie aqueuse selon l'une quelconque des revendications 1 à 7, dans laquelle
la solution aqueuse d'électrolyte comprend le sel de potassium dissous à une concentration de 4,0 mol ou plus et 7,0 mol ou moins pour 1 kg de l'eau.

9. Batterie aqueuse selon l'une quelconque des revendications 1 à 8, dans laquelle
la solution aqueuse d'électrolyte contient l'eau et des ions potassium,
un rapport molaire (H₂O/K) entre l'eau et les ions potassium est de 3,5 ou moins, et
la solution aqueuse d'électrolyte contient l'eau et du pyrophosphate de potassium dissous dans l'eau.

10. Batterie aqueuse selon l'une quelconque des revendications 1 à 9, dans laquelle
un pH de la solution aqueuse d'électrolyte est de 3 ou plus et 13 ou moins.

11. Batterie aqueuse selon l'une quelconque des revendications 1 à 10, dans laquelle
la solution aqueuse d'électrolyte n'implique pas de précipitation de sel lorsqu'elle est refroidie de 0 °C à -60 °C.

12. Batterie aqueuse selon l'une quelconque des revendications 1 à 11, dans laquelle
une viscosité à 20 °C de la solution aqueuse d'électrolyte est de 10 mPa·s ou plus et 600 mPa·s ou moins.
